# EUROPEAN PATENT APPLICATION

(11) **EP 1 965 389 A2**
(43) Date of publication of application: **03.09.2008**
(21) Application number: 08151032.3
(22) Date of filing: 04.02.2008
(51) Int. Cl.: G11B 27/034, H04N 5/262, G06T 5/00

(54) **Information encoding method, information playback method, and information storage medium using two versions of film grain reproduction information**

(30) Priority: 28.02.2007 JP 2007050313
(71) Applicant: Kabushiki Kaisha Toshiba, Minato-ku, Tokyo 105-8001 (JP)
(72) Inventor: Date, Naoto, Tokyo 105-8001 (JP); Yamakage, Tomoo, Tokyo 105-8001 (JP); Onodera, Mieko, Tokyo 105-8001 (JP)
(74) Representative: Henkel, Feiler & Hänzel

(57) **Abstract**

According to one embodiment, an information encoding method generates main image information from input image information by applying noise reduction processing to the input image information, estimates noise image information included in the input image information from the input image information and the main image information to generate first model information corresponding to the noise image information, corrects a parameter which does not satisfy a predetermined condition of a plurality of parameters included in the first model information to generate second model information including the plurality of parameters which reflect the correction, encodes the main image information to generate encoded image information, and generates encoded information including the encoded image information, the first model information, and the second model information.

## Description

One embodiment of the present invention relates to a Film Grain Technology (FGT).

Upon encoding video pictures of movie films for the purpose of digital versatile disc (DVD) content applications or the like, an atmosphere unique to movies is often spoiled. This is because film grain (graininess of films) in video pictures is lost as a result of encoding. Film grain is called "the soul of Hollywood", and is accorded very high importance in DVD authoring studios.

United States Patent Application No. 2006/0082649 discloses a film grain simulation method. H.264 as one of international standards of moving image encoding discloses a Film Grain Technology (FGT). According to these disclosed techniques, video pictures which retain film grain can be provided by compositing a film grain image to a main image.

According to the examinations of the inventors, when a weak film grain image is added to a decoded main image, i.e., when the value of information indicating the intensity of film grain of information required to reproduce film grain is small, the occurrence of a distortion is observed at the block vertical edges of an output image. This considerably impairs the quality of an output image.

When film grain which is not originally needed is added to a black stripe region which contacts a video region, this also impairs the quality of an output image.

It is an object of the invention to provide an information encoding method and information storage medium which allow to satisfactorily reproduce film grain, and an information playback method with high reproducibility of film grain.

An information encoding method according to one embodiment of the invention comprises: generating main image information from input image information by applying noise reduction processing to the input image information; estimating noise image information included in the input image information from the input image information and the main image information to generate first model information corresponding to the noise image information; correcting a parameter which does not satisfy a predetermined condition of a plurality of parameters included in the first model information to generate second model information including the plurality of parameters which reflect the correction; encoding the main image information to generate encoded image information; and generating encoded information including the encoded image information, the first model information, and the second model information.

An information playback method according to one embodiment of the invention comprises: selecting the first model information of the first model information and the second model information included in the encoded information generated by the information encoding method; generating noise image information from the first model information; generating decoded image information by decoding the encoded image information included in the encoded information; generating output image information based on the decoded image information and the noise image information; and outputting the output image information.

An information storage medium according to one embodiment of the invention stores the encoded information generated by the information encoding method.

The invention can be more fully understood from the following detailed description when taken in conjunction with the accompanying drawings, in which:
FIG. 1 is a schematic block diagram showing a moving image encoding apparatus according to the first embodiment of the invention;
FIG. 2 is a schematic block diagram showing a moving image decoding apparatus according to the first and second embodiments of the invention;
FIG. 3 is a schematic block diagram showing a moving image encoding apparatus according to the second embodiment of the invention;
FIG. 4 is a schematic block diagram showing a moving image decoding apparatus according to the third and fourth embodiments of the invention;
FIG. 5 shows an example of a parameter limiting region of film grain reproduction information;
FIG. 6 is a schematic block diagram showing a moving image encoding apparatus according to the third embodiment of the invention;
FIG. 7 is a schematic block diagram showing a moving image encoding apparatus according to the fourth embodiment of the invention;
FIG. 8 shows an example of an improvement of image quality by superposing film grain on black stripe parts and a film grain frame;
FIG. 9 shows an example of superposing of film grain on a black stripe part;
FIG. 10 shows an example of the relationship among a video decoded image including a black stripe part, film grain, and a film grain frame;
FIG. 11 is a schematic view of an advanced content;
FIG. 12 is a schematic view of an advanced content;
FIG. 13 is a schematic view of a standard content;
FIG. 14 is a schematic view of a standard content;
FIG. 15 is a schematic view of video title set information VTSI of a PVTS;
FIG. 16 is a view for explaining a main video display region;
FIG. 17 is a schematic view of a time map STMAP of an SVTS;
FIG. 18 is a view showing the relationship between planes and an output image in an advanced content;
FIG. 19 is a schematic block diagram of an HD DVD-Video player;
FIG. 20 is a schematic view of a video manager recording area VMG and a video manager information area VMGI of a standard content;
FIG. 21 is a schematic view of a video manager information management table VMGI_MAT;
FIG. 22 is a schematic view of film grain frame information FP_FILMG_FI and film grain frame information VMGM_FILMG_FI of an FP-PGCM;
FIG. 23 is a schematic view of a video title set information area VTSI of a video title set recording area VTS of a standard content;
FIG. 24 is a schematic view of a video title set information management table VTSI_MAT;
FIG. 25 is a schematic view of VTSM film grain frame information VTSM_FILMG_FI and VTS title film grain frame information VTSTT_FILMG_FI;
FIG. 26 is a view showing the relationship between planes and an output image in a standard content;
FIG. 27 is a view showing an example of a film grain addition/non-addition region setting;
FIG. 28 is a schematic view of video title set information VTSI of a PVTS;
FIG. 29 is a view for explaining an example of a main video display region;
FIG. 30 is a schematic view of a time map STMAP of an SVTS;
FIG. 31 is a schematic block diagram of an HD DVD-Video player;
FIG. 32 is a schematic block diagram of a video decoder according to the sixth embodiment of the invention;
FIG. 33 is a schematic view of a video manager information area VMGI of a video manager recording area VMG of a standard content;
FIG. 34 is a schematic view of a video manager information management table VMGI_MAT;
FIG. 35 is a schematic view of film grain frame information FP_FILMG_FI and VMGM film grain frame information VMGM_FILMG_FI;
FIG. 36 is a schematic view of a video title set information area VTSI;
FIG. 37 is a schematic view of a video title set information management table VTSI_MAT; and
FIG. 38 is a schematic view of VTSM film grain frame information VTSM_FILMG_FI and VTS title film grain frame information VTSTT_FILMG_FI.

Various embodiments according to the invention will be described hereinafter with reference to the accompanying drawings. In general, according to one embodiment of the invention, an information encoding method comprises: generating main image information from input image information by applying noise reduction processing to the input image information; estimating noise image information included in the input image information from the input image information and the main image information to generate first model information corresponding to the noise image information; correcting a parameter which does not satisfy a predetermined condition of a plurality of parameters included in the first model information to generate second model information including the plurality of parameters which reflect correction; encoding the main image information to generate encoded image information; and generating encoded information including the encoded image information, the first model information, and the second model information.

Embodiments of the invention will be described hereinafter with reference to the accompanying drawings.

An overview of film grain encoding processing will be described below. By applying film grain removal processing to an input image as a moving image, a main image in which film grain is removed is generated. An encoding unit applies compression encoding processing using motion compensation, orthogonal transformation, and quantization to the generated main image. On the other hand, a noise estimation unit generates a film grain image based on the difference between the input image and main image, and estimates information required to reproduce film grain (information required to identify a film grain image database to be quoted, the intensity of film grain, etc.), thus generating model information.

In decoding processing, a decoding unit generates a main image in which film grain is removed as a decoded image. A noise generation unit generates a noise image, i.e., a film grain image from the main image using model information sent from the encoding unit. By adding the generated main image and film grain image, an output image in which film grain is reproduced is obtained.

With the above processing, since film grain is classified and modeled, an atmosphere unique to movies can be reproduced without losing film grain by the encoding processing.

According to the examinations of the inventors, when a weak film grain image is added to a decoded main image, i.e., when the value of information indicating the intensity of film grain of information required to reproduce film grain is small, the occurrence of a distortion is observed at the block vertical edges of an output image. This considerably impairs the quality of an output image. In film grain image generation processing, smoothing filter processing called a deblocking filter is applied to the vertical edges of blocks for the purpose of obscuring seams of film grain images. This deblocking filter applies truncation processing without including any rounding term, as described by:

```
     for( ( k = 0; k < 8; k++) {
     11 = previous_fg_block[ 6 ] [ k ]
     10 = previous_fg_block [ 7 ] [ k ]
     r0 = fg_block [ 0 ] [ k ]
     r1 = fg_block [ 1 ] [ k ]
     fg_block[ 0 ] [ k ] = (10 + (r0 << 1) + r1) >> 2
     previous_fg_block[ 7 ] [ k ] = (11 + (10 << 1) +
 r0) >> 2
     }
```

For this reason, since the distribution of film grain signal levels at the vertical edges of blocks whose values are updated by the deblocking filter shifts to the negative side with respect to that of film grain signal levels generated in other regions, this causes a distortion observed at the block vertical edges of an output image. By contrast, by taking a measure for omitting the deblocking filter, executing round-off processing including a rounding term in the deblocking filter, or the like, a distortion at the vertical edges can be eliminated.

Upon taking such vertical distortion measure, compatibility between a vertical distortion measure supported apparatus and a vertical distortion measure unsupported apparatus need be assured. That is, upon playing back data with high film grain reproducibility (i.e., including a case wherein the information value indicating the film grain intensity is small), the vertical distortion measure supported apparatus can play back such data without any vertical distortion, but there is a risk of generation of a vertical distortion in the vertical distortion measure unsupported apparatus. The embodiments to be described later can assure compatibility between these vertical distortion measure supported apparatus and vertical distortion measure unsupported apparatus.

Also, addition of film grain which is not originally needed in a black stripe region that contacts a video region in a movie is to be prevented. Since film grain is added for each block of a decoded image, when a given block of the decoded image extends across the video region and black stripe region, film grain equivalent to that for the video region is added to the black stripe. The embodiments to be described below can prevent image quality from deteriorating due to such addition of film grain to the black stripe.

### (First Embodiment)

The first embodiment will explain an image encoding apparatus (with noise reduction [NR]) which generates two pieces of Film Grain Characteristic Supplemental Enhancement Information (SEI), an information storage medium which stores compressed data including two pieces of FG_SEI, and an image decoding apparatus (information playback apparatus) which selects one of the two pieces of FG_SEI stored in the information storage medium.

A film grain simulation system comprises an image encoding apparatus and image decoding apparatus.

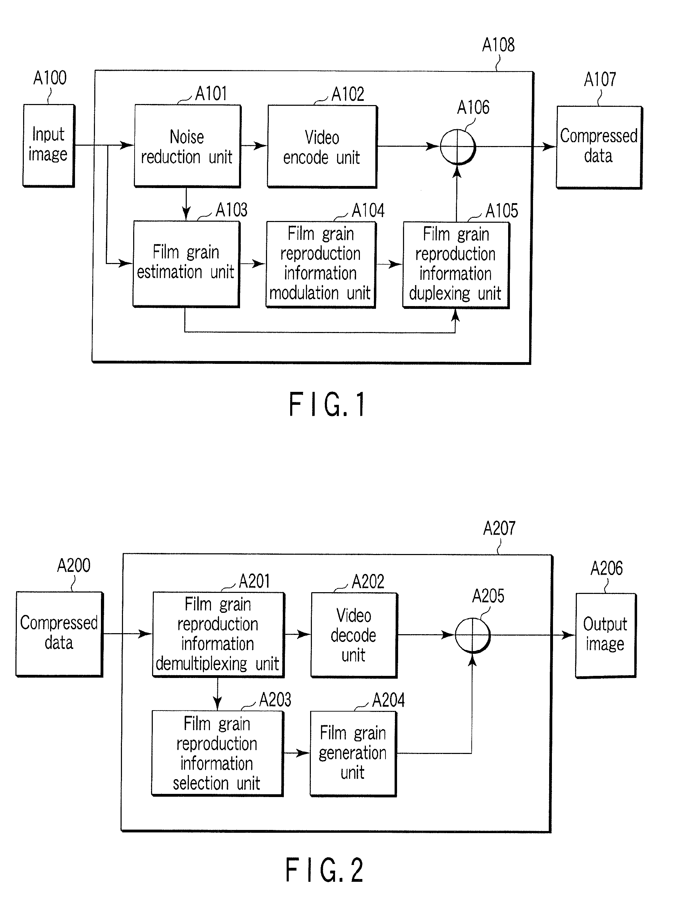

An image encoding apparatus will be described first. As shown in FIG. 1, an image encoding apparatus A108 comprises a noise reduction unit A101, video encode unit A102, film grain estimation unit A103, film grain reproduction information modulation unit A104, film grain reproduction information duplexing unit A105, and multiplexing unit A106.

The noise reduction unit A101 removes film grain from an input image A100. An image output from the noise reduction unit A101 will be referred to as a main image hereinafter. The encode unit A102 applies moving image encoding processing using motion compensation, orthogonal transformation, and quantization to the main image, thus generating main image compressed data.

The film grain estimation unit A103 generates a film grain image by calculating the difference between the input image A100 including film grain and the main image in which film grain is removed. Furthermore, the film grain estimation unit A103 estimates the intensity of a film grain signal and the ID of a film grain database to be quoted, which are used upon reproducing the film grain image. These pieces of information will be referred to as film grain reproduction information hereinafter. As a practical example of the film grain reproduction information, a Film Grain Characteristic Supplemental Enhancement Information (SEI) message in H.264/AVC is known.

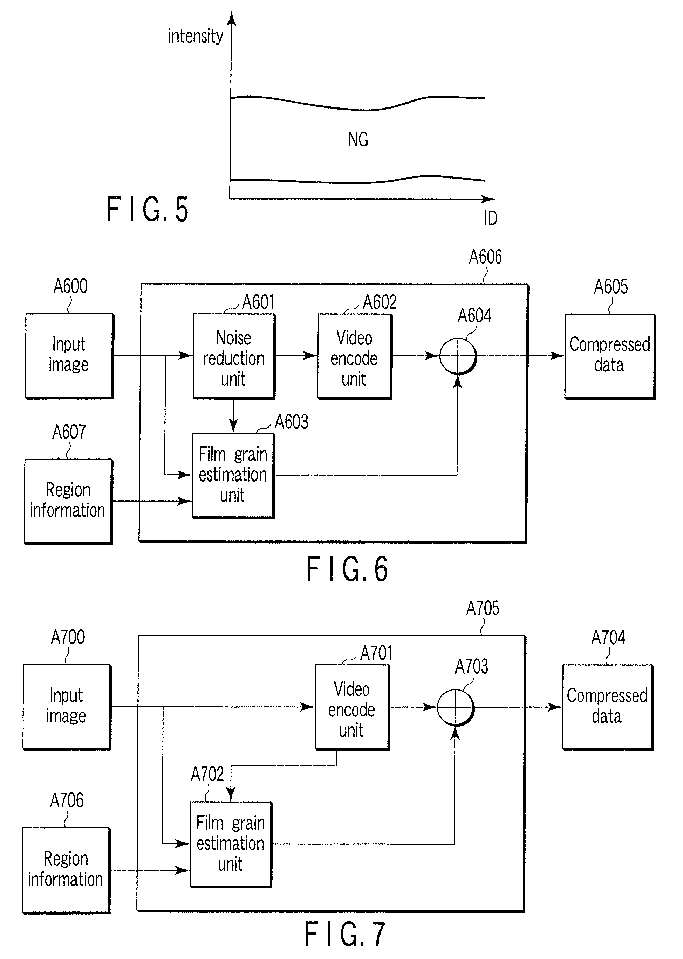

The film grain information modulation unit A104 modulates (corrects) the estimated film grain reproduction information (first model information) so that a plurality of parameters included in the film grain reproduction information fall within a specific parameter range, thus generating parameter-limited film grain reproduction information (second model information) including the plurality of modulated (corrected) parameters. As described above, FGT suffers a bias of generated signals due to truncation processing of the deblocking filter and, hence, vertical lines may appear in an output image. The bias of generated signals is more conspicuous as the film grain signal intensity is lower and as the frequency of a film grain database to be used is lower. Hence, the estimated film grain reproduction information is modulated to fall within the parameter range that can eliminate the bias of signal generation, thus avoiding a problem of vertical lines that appear in an output image. FIG. 5 shows an example of the specific parameter range. The vertical axis plots the film grain signal intensity, and the horizontal axis plots the ID of the film grain database. The parameter-limited film grain reproduction information is designed for use upon execution of film grain generation processing according to the FGT in which truncation processing is made in the deblocking filter.

The film grain reproduction information duplexing unit A105 duplexes the film grain reproduction information and parameter-limited film grain reproduction information to generate duplex film grain reproduction information. As an order of information in this case, the film grain reproduction information comes first, and the parameter-limited film grain reproduction information follows. Upon execution of the vertical distortion measure supported FGT generation processing in which the deblocking filter executes round-off processing, no deblocking filter is applied, or the like, the decoding side uses the film grain reproduction information. On the other hand, upon execution of the vertical distortion measure unsupported FGT generation processing, the decoding side uses the parameter-limited film grain reproduction information. That is, the vertical distortion measure supported apparatus selects the film grain reproduction information, and the vertical distortion measure unsupported apparatus selects the parameter-limited film grain reproduction information. In this way, the compatibility between the vertical distortion measure supported apparatus and vertical distortion measure unsupported apparatus can be assured.

The multiplexing unit A106 appends the duplex film grain reproduction information to the main image compressed data. In this way, compressed data A107 compatible to the film grain simulation system is completed.

An information storage medium stores this compressed data A107.

An image decoding apparatus for decoding the compressed data A107 stored in the information storage medium will be described below. As shown in FIG. 2, an image decoding apparatus A205 comprises a film grain reproduction information demultiplexing unit A201, video decode unit A202, film grain reproduction information selection unit A203, film grain generation unit A204, and image addition unit A205.

The film grain reproduction information demultiplexing unit A201 demultiplexes one or two pieces of film grain reproduction information from compressed data A200. The one or two pieces of demultiplexed film grain reproduction information is or are sent to the film grain reproduction information selection unit A203. The video decode unit A202 applies image decoding processing using motion compensation, dequantization, and inverse orthogonal transformation to the remaining compressed data to obtain a main image.

The film grain reproduction information selection unit A203 receives the one or two pieces of film grain reproduction information. If the number of pieces of received film grain reproduction information is one, the film grain reproduction information selection unit A203 sends that information to the film grain generation unit A204. If the number of pieces of received film grain reproduction information is two, the film grain reproduction information selection unit A203 selects one of these pieces of information according to the processing contents of the film grain generation unit A204.

In an image decoding apparatus (vertical distortion measure unsupported apparatus), the deblocking filter executes truncation processing in the film grain generation unit A204. This means a distortion of a vertical line may appear. That is, the image decoding apparatus (vertical distortion measure unsupported apparatus) selects the parameter-limited film grain reproduction information located at the back position of the two pieces of film grain reproduction information.

In an image decoding apparatus (vertical distortion measure supported apparatus), the deblocking filter executes round-off processing or it is omitted in the film grain generation unit A204. This means a certain vertical line distortion measure is taken.
That is, the image decoding apparatus (vertical distortion measure supported apparatus) selects the film grain reproduction information located at the front position.

Finally, the image addition unit A205 adds a film grain image generated by the film grain generation unit A204 to the output image of the decode unit A202. In this way, an output image A206 is obtained.

As described above, this film grain simulation system generates first film grain reproduction information and second film grain reproduction information on the encoding side, duplexes these pieces of information, and appends the duplex information to compressed data. The first film grain reproduction information can reproduce film grain faithful to an original image since its parameters are not particularly limited. However, when the first film grain reproduction information is used in the film grain generation processing without any vertical line distortion measure, a vertical line distortion may be generated. The second film grain reproduction information does not always reproduce film grain faithful to an original image since its parameters are limited. However, when the second film grain reproduction information is used in the film grain generation processing without any vertical line distortion measure, no vertical line distortion is generated.

When the film grain generation processing has already taken the vertical line measure (the round-off processing in the deblocking filter, omission of the deblocking filter, or the like), the first film grain reproduction information is used. On the other hand, when the film grain generation processing does not take any vertical line distortion measure, the second film grain reproduction information is used.

In this manner, even in the system including both the film grain generation processing which has taken the vertical line distortion measure and that without any vertical line distortion measure, generation of a vertical line distortion can be suppressed, while the reproducibility of film grain can be maximized.

### (Second Embodiment)

The second embodiment will explain an image encoding apparatus (without NR) which generates two pieces of FG_SEI, an information storage medium which stores compressed data including two pieces of FG_SEI, and an image decoding apparatus (information playback apparatus) which selects one of two pieces of FG_SEI stored in the information storage medium.

A film grain simulation system comprises an image encoding apparatus and image decoding apparatus.

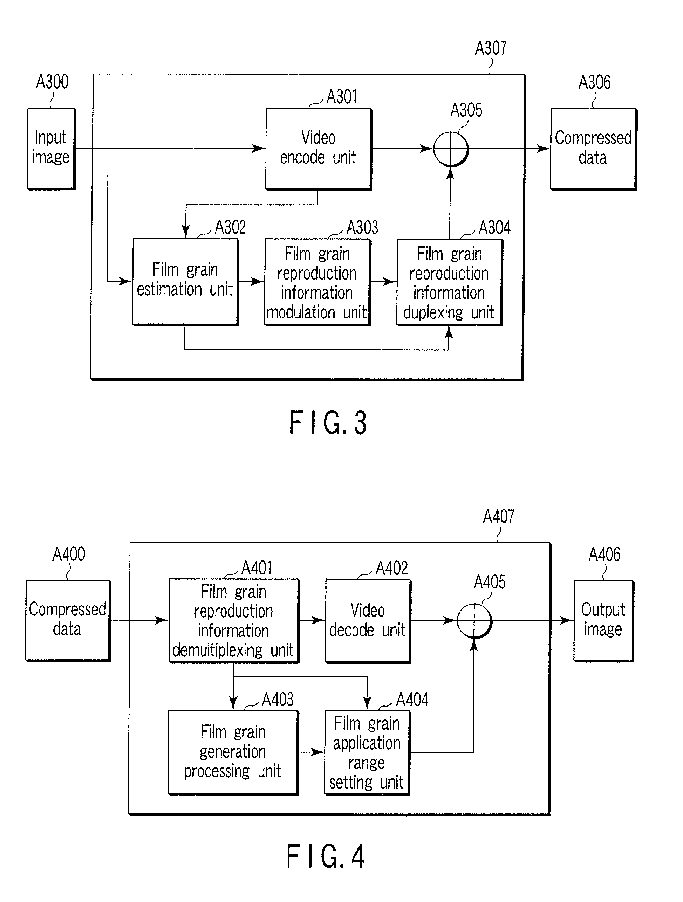

An image encoding apparatus will be described first. As shown in FIG. 3, an image encoding apparatus A307 comprises a video encode unit A301, film grain estimation unit A302, film grain reproduction information modulation unit A303, film grain reproduction information duplexing unit A304, and multiplexing unit A305.

The video encode unit A301 applies moving image encoding processing using motion compensation, orthogonal transformation, and quantization to an input image A300, thus generating main image compressed data.

The film grain estimation unit A302 generates a film grain image by calculating the difference between the input image A300 including film grain and a local decode image of the main image compressed data in which film grain is reduced by video encoding. Furthermore, the film grain estimation unit A302 estimates the intensity of a film grain signal and the ID of a film grain database to be quoted, which are used upon reproducing the film grain image. These pieces of information will be referred to as film grain reproduction information hereinafter. As a practical example of the film grain reproduction information, a Film Grain Characteristic Supplemental Enhancement Information (SEI) message in H.264/AVC is known.

The film grain information modulation unit A303 modulates (corrects) the estimated film grain reproduction information (first model information) so that a plurality of parameters included in the film grain reproduction information fall within a specific parameter range, thus generating parameter-limited film grain reproduction information (second model information) including the plurality of modulated (corrected) parameters. As described above, FGT suffers a bias of generated signals due to truncation processing of the deblocking filter and, hence, vertical lines may appear in an output image. The bias of generated signals is more conspicuous as the film grain signal intensity is lower and as the frequency of a film grain database to be used is lower. Hence, the estimated film grain reproduction information is modulated to fall within the parameter range that can eliminate the bias of signal generation, thus avoiding a problem of vertical lines that appear in an output image. FIG. 5 shows an example of the specific parameter range. The vertical axis plots the film grain signal intensity, and the horizontal axis plots the ID of the film grain database. The parameter-limited film grain reproduction information is designed for use upon execution of film grain generation processing according to the FGT in which truncation processing is made in the deblocking filter.

The film grain reproduction information duplexing unit A304 duplexes the film grain reproduction information and parameter-limited film grain reproduction information to generate duplex film grain reproduction information. As an order of information in this case, the film grain reproduction information comes first, and the parameter-limited film grain reproduction information follows. Upon execution of the vertical distortion measure supported FGT generation processing in which the deblocking filter executes round-off processing, no deblocking filter is applied, or the like, the decoding side uses the film grain reproduction information. On the other hand, upon execution of the vertical distortion measure unsupported FGT generation processing, the decoding side uses the parameter-limited film grain reproduction information. That is, the vertical distortion measure supported apparatus selects the film grain reproduction information, and the vertical distortion measure unsupported apparatus selects the parameter-limited film grain reproduction information. In this way, the compatibility between the vertical distortion measure supported apparatus and vertical distortion measure unsupported apparatus can be assured.

The multiplexing unit A305 appends the duplex film grain reproduction information to the main image compressed data. In this way, compressed data A107 compatible to the film grain simulation system is completed.

An information storage medium stores this compressed data A306.

An image decoding apparatus for decoding the compressed data A306 stored in the information storage medium executes the same processing as in the first embodiment.

As described above, this film grain simulation system generates first film grain reproduction information and second film grain reproduction information on the encoding side, duplexes these pieces of information, and appends the duplex information to compressed data. The first film grain reproduction information can reproduce film grain faithful to an original image since its parameters are not particularly limited. However, when the first film grain reproduction information is used in the film grain generation processing without any vertical line distortion measure, a vertical line distortion may be generated. The second film grain reproduction information does not always reproduce film grain faithful to an original image since its parameters are limited. However, when the second film grain reproduction information is used in the film grain generation processing without any vertical line distortion measure, no vertical line distortion is generated.

When the film grain generation processing has already taken the vertical line measure (the round-off processing in the deblocking filter, omission of the deblocking filter, or the like), the first film grain reproduction information is used. On the other hand, when the film grain generation processing does not take any vertical line distortion measure, the second film grain reproduction information is used.

In this manner, even in the system including both the film grain generation processing which has taken the vertical line distortion measure and that without any vertical line distortion measure, generation of a vertical line distortion can be suppressed, while the reproducibility of film grain can be maximized.

### (Third Embodiment)

The third embodiment will explain an image encoding apparatus (with NR) which records FG region information in FG_SEI, an information storage medium which stores compressed data including FG region information in FG_SEI, and an image decoding apparatus (information playback apparatus) which decodes FG based on FG region information.

A film grain simulation system comprises an image encoding apparatus and image decoding apparatus.

An image encoding apparatus will be described first. As shown in FIG. 6, an image encoding apparatus A606 comprises a noise reduction unit A601, video encode unit A602, film grain estimation unit A603, and multiplexing unit A604.

The noise reduction unit A601 removes film grain from an input image A600. An image output from the noise reduction unit A601 will be referred to as a main image hereinafter. The video encode unit A602 applies moving image encoding processing using motion compensation, orthogonal transformation, and quantization to the main image, thus generating main image compressed data.

The film grain estimation unit A603 generates a film grain image by calculating the difference between the input image A600 including film grain and the main image in which film grain is removed. Furthermore, the film grain estimation unit A603 estimates the intensity of a film grain signal and the ID of a film grain database to be quoted, which are used upon reproducing the film grain image. These pieces of information will be referred to as film grain reproduction information (model information) hereinafter. As a practical example of the film grain reproduction information, a Film Grain Characteristic Supplemental Enhancement Information (SEI) message in H.264/AVC is known. Moreover, the film grain estimation unit A603 receives region information A607, and describes it in the film grain reproduction information. The decoding side uses the region information A607 to check if a region of interest is a region to which film grain is to be added.

The multiplexing unit A604 appends the film grain reproduction information to the main image compressed data. In this way, compressed data A605 compatible to the film grain simulation system is completed.

An information storage medium stores this compressed data A605.

An image decoding apparatus for decoding the compressed data A605 stored in the information storage medium will be described below. As shown in FIG. 4, an image decoding apparatus A407 comprises a film grain reproduction information demultiplexing unit A401, video decode unit A402, film grain generation unit A403, film grain application range setting unit A404, and image addition unit A405.

The film grain reproduction information demultiplexing unit A401 demultiplexes film grain reproduction information from compressed data A400.

The video decode unit A402 applies image decoding processing (for example, H.264) using motion compensation, dequantization, and inverse orthogonal transformation to compressed data demultiplexed from the film grain reproduction information to obtain video data.

The film grain reproduction information is used in the film grain generation unit A403 so as to obtain a film grain image. The processing of the film grain generation unit A403 is that for generating film grain images for respective image blocks in accordance with the film grain reproduction information. For example, a film grain generation algorithm of the FGT is available.

The film grain application range setting unit A404 receives, as inputs, the film grain reproduction information and film grain image. The film grain reproduction information describes the region information A607 as a film grain application region, which masks, for an integer number of pixels, the film grain images generated for respective blocks. For example, the numbers of pixels of upper and lower black stripe regions of a movie are described as the film grain application region, and film grain signals of the film grain images, which fall within the black stripe regions, are set to be zero. Finally, the image addition unit A405 adds the film grain images output from the film grain application range setting unit A404 to the video data output from the video decode unit A402. In this manner, an output image A406 is completed.

As described above, in this film grain simulation system, the film grain application range setting unit A404 can set film grain signals to be added to the black stripe regions in a movie to be zero. In this way, a problem of addition of unwanted film grain to the black stripes can be solved.

### (Fourth Embodiment)

The fourth embodiment will explain an image encoding apparatus (without NR) which records FG region information in FG_SEI, an information storage medium which stores compressed data including FG region information in FG_SEI, and an image decoding apparatus (information playback apparatus) which decodes FG based on FG region information.

A film grain simulation system comprises an image encoding apparatus and image decoding apparatus.

An image encoding apparatus will be described first. As shown in FIG. 7, an image encoding apparatus A705 comprises a video encode unit A701, film grain estimation unit A702, and multiplexing unit A703.

The video encode unit A701 applies moving image encoding processing using motion compensation, orthogonal transformation, and quantization to an input image A700, thus generating main image compressed data.

The film grain estimation unit A702 generates a film grain image by calculating the difference between the input image A700 including film grain and a local decode image of the main image compressed data in which film grain is reduced by video encoding. Furthermore, the film grain estimation unit A302 estimates the intensity of a film grain signal and the ID of a film grain database to be quoted, which are used upon reproducing the film grain image. These pieces of information will be referred to as film grain reproduction information hereinafter. As a practical example of the film grain reproduction information, a Film Grain Characteristic Supplemental Enhancement Information (SEI) message in H.264/AVC is known. Moreover, the film grain estimation unit A702 receives region information A706, and describes it in the film grain reproduction information. The decoding side uses the region information A706 to check if a region of interest is a region to which film grain is to be added.

The multiplexing unit A703 appends the film grain reproduction information to the main image compressed data. In this way, compressed data A704 compatible to the film grain simulation system is completed.

An information storage medium stores this compressed data A704.

An image decoding apparatus for decoding the compressed data A704 stored in the information storage medium is the same as that of the third embodiment.

As described above, in this film grain simulation system, the film grain application range setting unit A404 can set film grain signals to be added to the black stripe regions in a movie to be zero. In this way, a problem of addition of unwanted film grain to the black stripes can be solved.

### (Fifth Embodiment)

The fifth embodiment will explain an information storage medium which stores film grain frame information (color information of a frame, position information of an image region [actual video region]), and information playback for playing back a film grain frame based on the film grain frame information stored in the information storage medium.

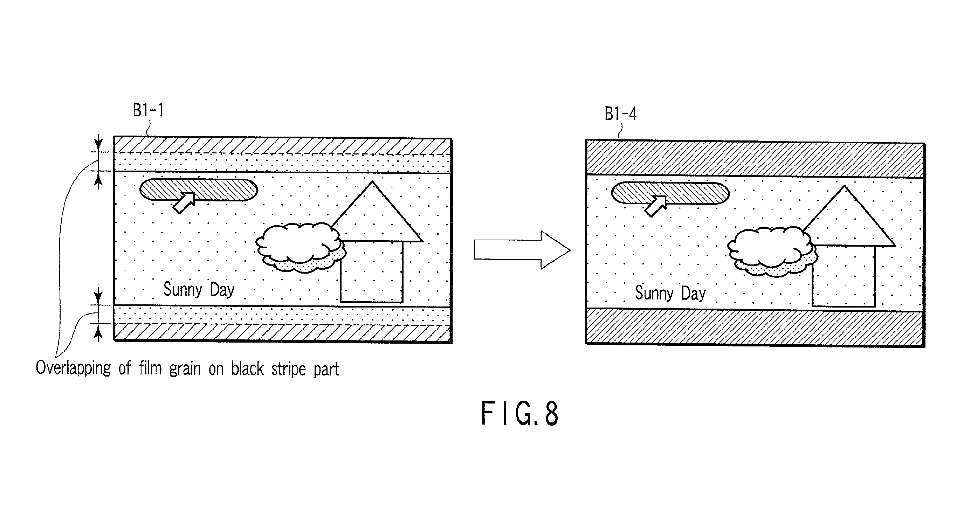

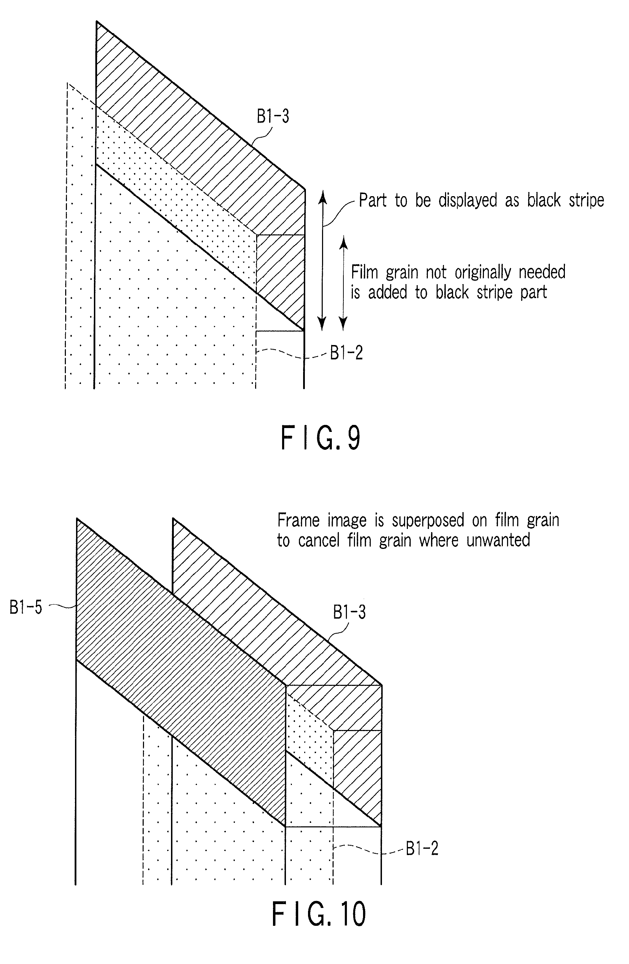

As shown in FIG. 9, when the FGT is applied to a video picture B1-3 including a black stripe like a movie, since film grain B1-2 is added to a decoded image for respective blocks, film grain which is not originally needed is added to the black stripe region which contacts a video region. As a result, an output video picture B1-1, in which film grain that is not originally needed is added to the black stripe region, is generated, as shown in FIG. 8.

By contrast, as shown in FIG. 10, an image (to be referred to as a film grain frame B1-5 hereinafter) having a form obtained by painting the black stripe region by a specific color and clipping the video region is superposed on a decoded image B1-3 and film grain B1-2. In this way, as shown in FIG. 8, an output image B1-4 which can cancel film grain added to an unwanted part can be obtained. In order to implement playback of the output image B1-4, video contents of DVD-Video, High-Definition Video DVD (HD DVD-Video), Blu-ray Disc (BD Video), and the like have information used to reproduce film grain, color information of a film grain frame, and video region information as a frame clipping part. That is, an information storage medium such as an optical disc or the like stores a video content (image information) including an image region (actual video region) and a non-image region (black stripe), information used to reproduce film grain (noise image information), and film grain frame information (control information used to control display of an overlapping region of the non-image region and noise image).

Examples of HD DVD contents will be described below.

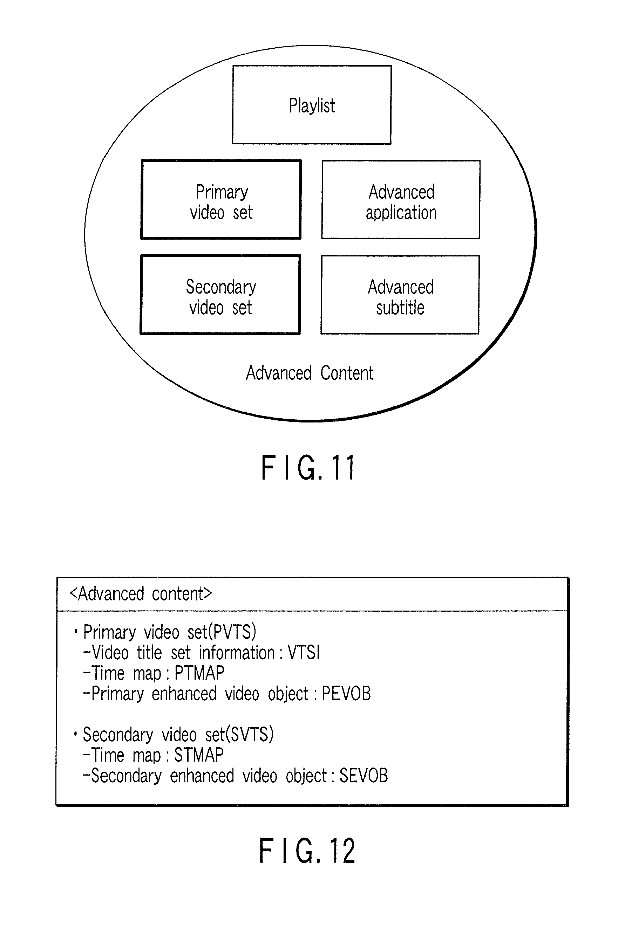

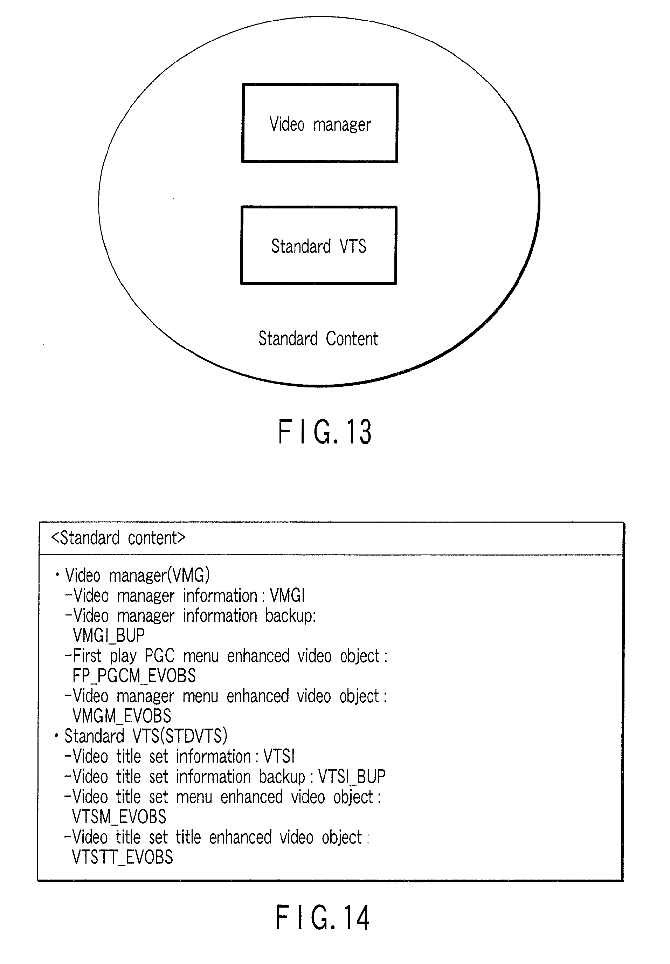

HD DVD is an optical disc media successor to DVD, and HD DVD-Video to be played back by an HD DVD player is an HD DVD application which can record video data with higher image quality, audio data with higher sound quality, higher-definition subtitle data, and navigation data more interactive than DVD-Video. Two different content types are available for HD DVD-Video: an advanced content which has higher interactiveness, and can realize commentary video data and the like in a picture-in-picture form (FIGS. 11 and 12); and a standard content which can attain higher image quality of video data, higher sound quality of audio data, and higher definition of subtitle data than DVD-Video while using the same structure as DVD-Video (FIGS. 13 and 14).

An advanced content is configured by a playlist used to manage playback information of the advanced content, a primary video set as a set of video, audio, and subtitle data, which is mainly saved in a disc, a secondary video set as a set of video, audio, and subtitle data, which may be saved in locations other than the disc, an advanced application including playback control information of the advanced content, graphic elements represented by buttons of a menu window and the like, and effect sound audio data, and an advanced subtitle for subtitle data. A primary video set PVTS includes a video title set information file VTSI which records attribute information and management information associated with video, audio, and subtitle data, a time map file PTMAP of the primary video set which records a time map for converting time information of the primary video set into address information, and a primary enhanced video object file PEVOB which records a primary enhanced video object as video information itself. A secondary video set SVTS includes a time map file STMAP of the secondary video set, which records a time map for converting time information of the secondary video set into address information, and a secondary enhanced video object file SEVOB which records a secondary enhanced video object as video information itself.

A standard content is configured by enhanced video object data which records video information itself, and navigation data IFO which records management information of the enhanced video object data. A standard content STDCT includes a video manager VMG that represents a menu window, and a standard video title set STDVTS which records video data. The video manager VMG which records the menu window is configured by a first play PGC menu enhanced video object FP_PGCM_EVOBS and video manager menu enhanced video object VMGM_EVOBS as the enhanced video object data EVOB that records video information itself, video manager information VMGMI as the navigation data IFO that records management information of these video objects, and a video manger information backup VMGI_BUP as backup data of that information. The standard video title set STDVTS includes a video title set menu enhanced video object VTSM_EVOBS and video title set title enhanced video object VTSTT_EVOBS as the enhanced video object data EVOB that records video information itself, video title set information VTSI as the navigation data IFO that records management information of these video objects, and a video title set information backup VTSI_BUP as backup data of that information.

At this time, an HD DVD-Video advanced content has film grain information as follows to solve the black stripe problem.

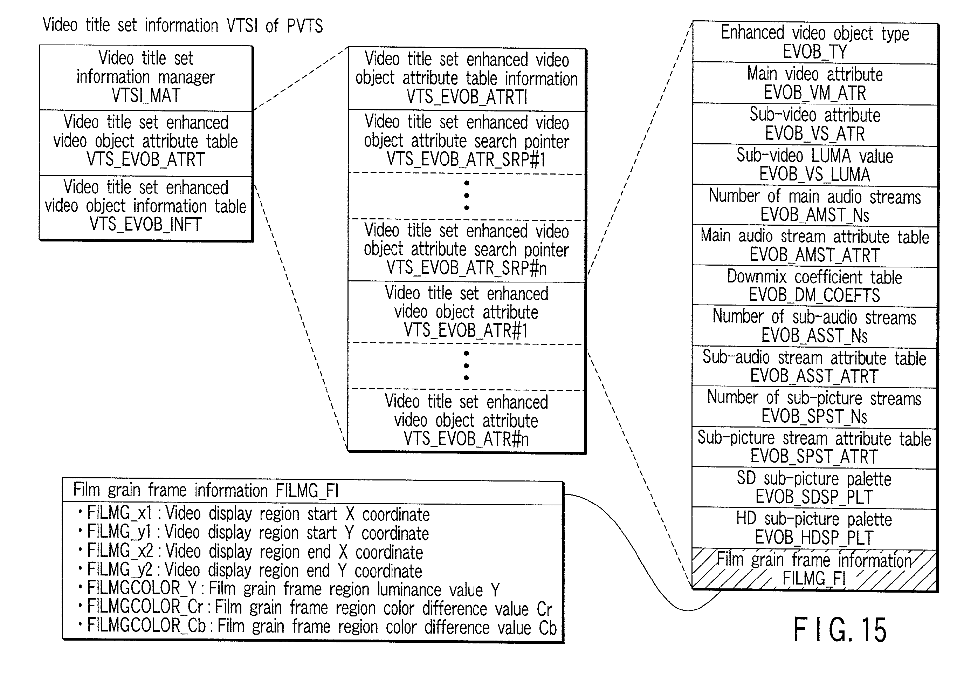

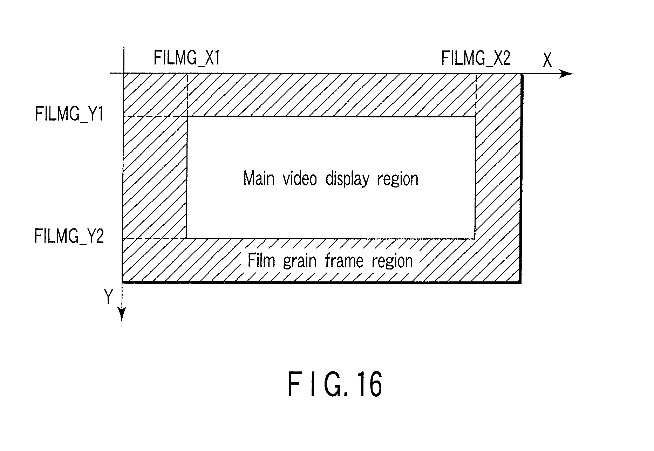

Video title set information VTSI of a primary video set PVTS of an advanced content has the structure shown in FIG. 15. The VTSI records a video title set enhanced video object attribute table VTS_EVOB_ATRT, which includes video title set enhanced video object attribute table information VTS_EVOB_ATRTI, a video title set enhanced video object attribute search pointer VTS_EVOB_ATR_SRP, and a video title set enhanced video object attribute VTS_EVOB_ATR. Furthermore, the video title set enhanced video object attribute VTS_EVOB_ATR describes attribute information of main video, sub-video, main audio, sub-audio, and sub-picture, and the like. In this embodiment, the VTS_EVOB_ATR records film grain frame information FILMG_FI. The film grain frame information FILMG_FI records a video display region start X coordinate FILMG_x1, video display region start Y coordinate FILMG_y1, video display region end X coordinate FILMG_x2, and video display region end Y coordinate FILMG_y2, which represent a video display region (see FIG. 16) as a clipping part of a film grain frame, and a film grain frame region luminance value Y FILMGCOLOR_Y, film grain frame region color difference value Cr FILMGCOLOR_Cr, and film grain frame region color difference value Cb FILMGCOLOR_Cb, which represent color information of the film grain frame, as shown in FIG. 15. Since the FILMG_FI is recorded in this area, the advanced content can have FILMG_FI for each EVOB. When the film grain frame is not used, the film grain frame information FILMG_FI area is padded with zero. This area is conventionally a reserved area, which is padded with zero, thus maintaining compatibility to the conventional HD DVD-Video content and player.

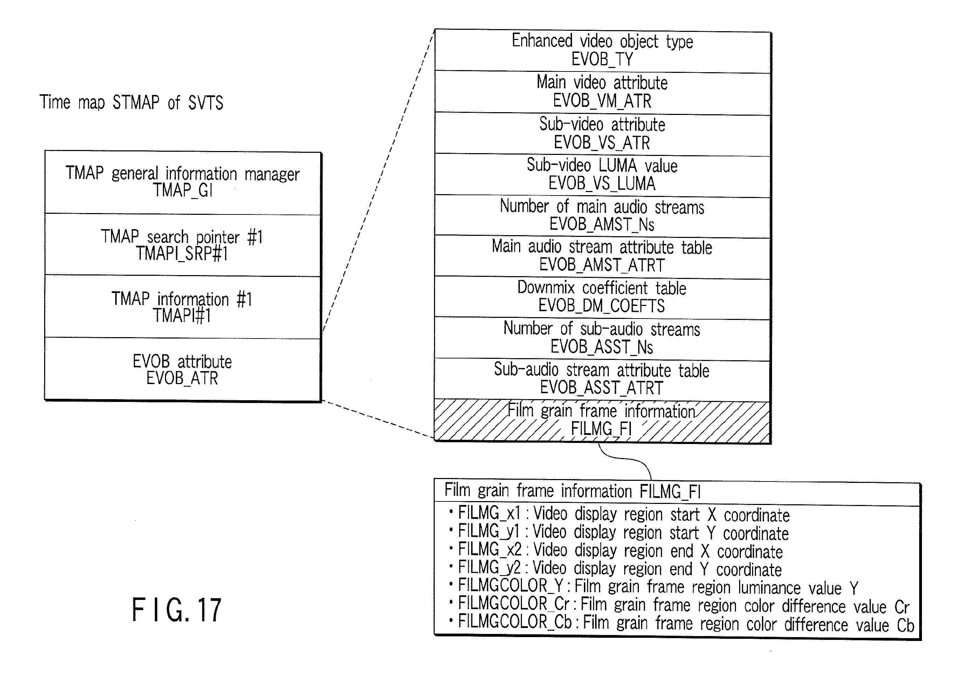

A time map STMAP of a secondary video set SVTS of an advanced content has the structure shown in FIG. 17. The STMAP includes a TMAP general information manager TMAP_GI, TMAP search pointer TMAPI_SRP, TMAP information TMAPI, and EVOB attribute EVOB_ATR. The EVOB attribute EVOB_ATR describes attribute information of main video, sub-video, main audio, and sub-audio, and the like. In this embodiment, the EVOB_ATR records film grain frame information FILMG_FI. The film grain frame information has the same information as in the aforementioned PVTS. When the film grain frame is not used, the film grain frame information FILMG_FI area is padded with zero. This area is conventionally a reserved area, which is padded with zero, thus maintaining compatibility to the conventional content and player. A playlist can also have the same information.

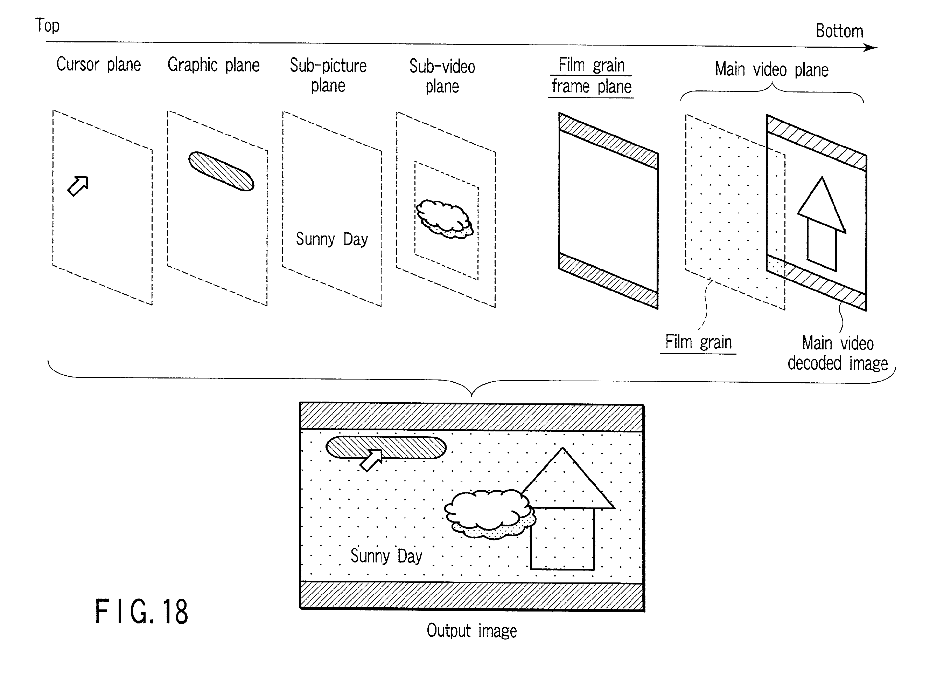

The advanced content having the film grain frame information FILMG_FI as described above is displayed by superposing planes in the order shown in FIG. 18. A main video plane as a main video is displayed at the lowermost position. A main video is an image obtained by adding film grain to an image decoded as a main video. On the main video plane, a film grain frame plane, which has a color indicated by the color information (FILMGCOLOR_Y, FILMGCOLOR_Cr, and FILMGCOLOR_Cb) of the film grain frame recorded in the film grain frame information FILMG_FI area, and from which a region defined by the video display region information (FILMG_x1, FILMG_y1, FILMG_x2, and FILMG_y2) as a clipping part of the film grain frame is clipped, is superposed. Then, a sub-video plane used for a commentary content or the like, a sub-picture plane used for a subtitle, a graphic plane variously used for buttons, menu main video, and the like, and a cursor plane indicating a pointer position of the user are output to overlap each other in this order. As described above, by inserting the film grain frame plane between the main video plane and sub-video plane, film grain which is superposed on a region which is not originally needed of the main video plane is overwritten by the film grain frame, thus canceling the film grain effect only for a part in which this effect is unwanted.

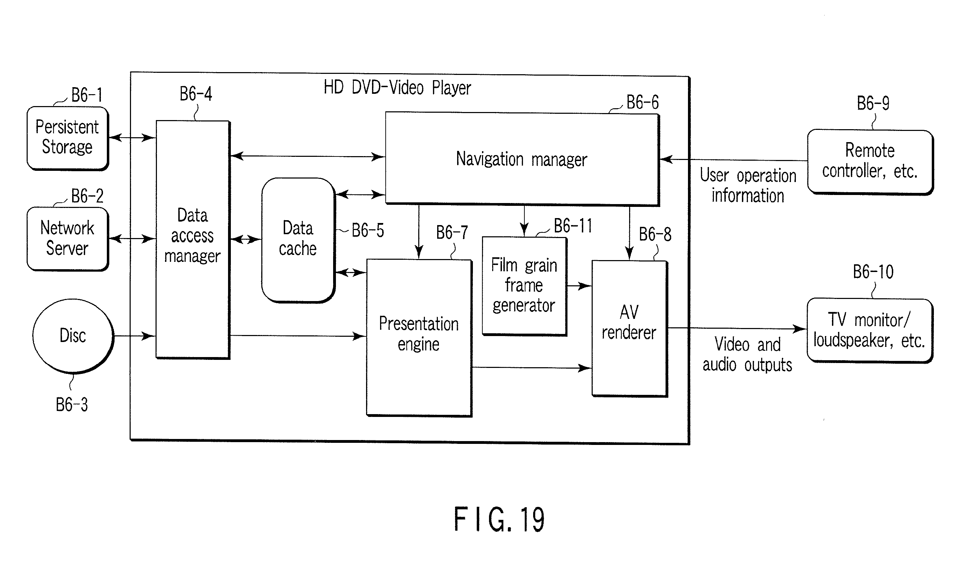

A system model of an HD DVD player at that time will be described below. As shown in FIG. 19, an HD DVD player can access a Persistent Storage B6-1 and Network Server B6-2 in addition to a disc B6-3. Inputs include user operation information from a remote controller B6-9 or the like, and outputs include video and audio data to a TV monitor and loudspeaker B6-10. A Player unit roughly comprises a data access manager B6-4, data cache B6-5, navigation manager B6-6, presentation engine B6-7, and AV renderer B6-8. The data access manager B6-4 controls accesses to the disc, network storage, and persistent storage. The data cache B6-5 includes a file cache and streaming buffer, and temporarily records data whose playback is underway. The navigation manager B6-6 includes a user interface engine which accepts user operations, and a Parser which loads and parses a navigation file. The navigation manager B6-6 executes playback initialization, and controls a title timeline as a playback time axis of a title, commands, and the like. The presentation engine B6-7 demultiplexes and decodes video, audio, and subtitle data, and outputs video, audio, and subtitle information to the AV renderer B6-8. The AV renderer B6-8 includes a part that controls audio mixing, and a part that controls video mixing. The system model of the HD DVD player has been exemplified, and this system model further comprises a film grain frame generator B6-11, as shown in FIG. 19. The film grain frame generator B6-11 generates a film grain frame image based on the film grain frame information FILMG_FI interpreted by the navigation manager B6-6. The film grain frame output from the film grain frame generator B6-11 is superposed by the AV renderer B6-8 in the order shown in FIG. 18.

A case will be described below wherein an HD DVD-Video standard content has film grain frame information.

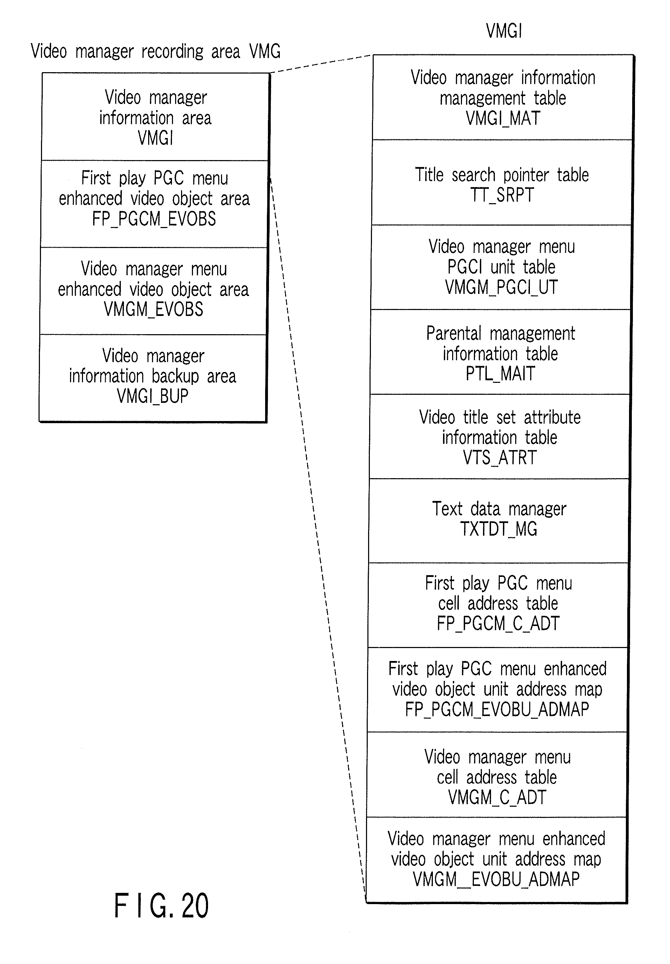

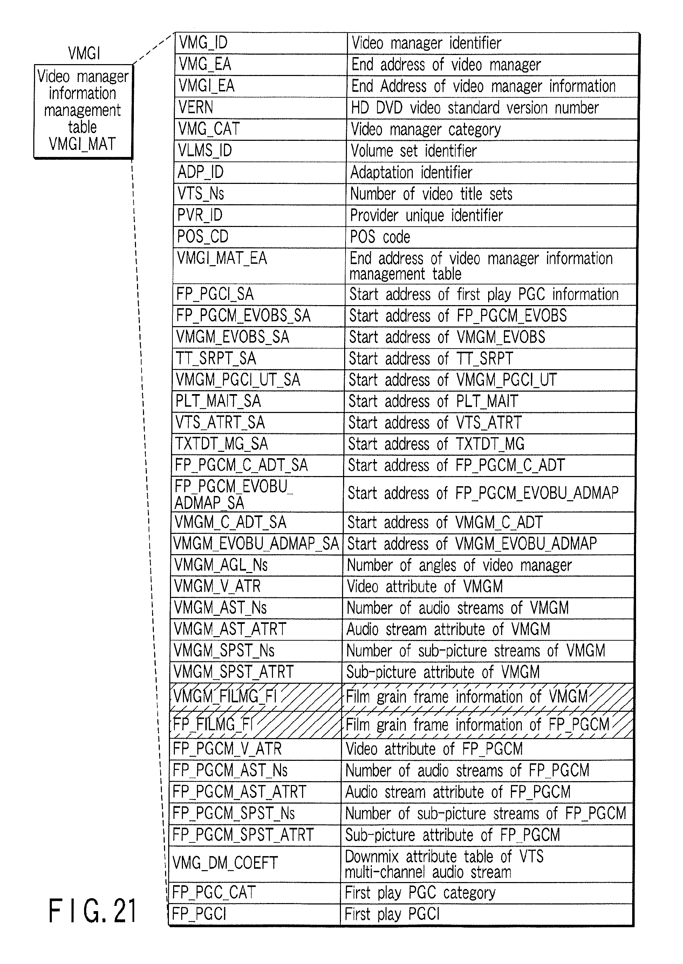

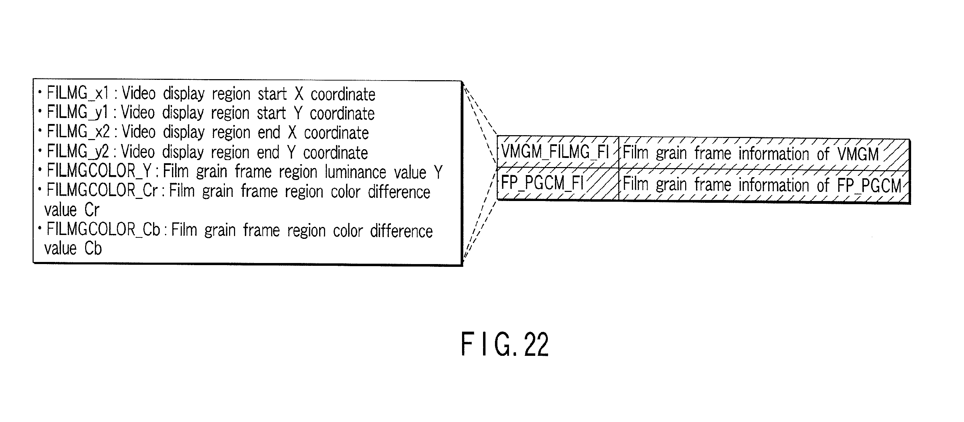

A video manager information area VMGI of a video manager VMG of a standard content has a configuration, as shown in FIGS. 20 to 22, and includes a video manager information management table VMGI_MAT, title search pointer table TT_SRPT, video manager menu PGCI unit table VMGM_PGCI_UT, parental management information table PTL_MAIT, video title set attribute information table VTS_ATRT, text data manager TXTDT_MG, first play PGC menu cell address table FP_PGCM_C_ADT, first play PGC menu enhanced video object unit address map FP_PGCM_C_ADT, video manager menu cell address table VMGM_C_ADT, and video manager menu enhanced video object unit address map VMGM_VOBU_ADMAP. The VMGI_MAT is configured by VMG identification information, address information in the VMGI, attribute information of FP_PGCM and VMGM video, audio, and subtitle data, and the like. In this embodiment, the VMGI_MAT records FP_PGCM film grain frame information FP_FILMG_FI and VMGM film grain frame information VMGM_FILMG_FI. The film grain frame information FP_FILMG_FI/VMGM_FILMG_FI records a video display region start X coordinate FILMG_x1, video display region start Y coordinate FILMG_y1, video display region end X coordinate FILMG_x2, and video display region end Y coordinate FILMG_y2, which represent a video display region as a clipping part of a film grain frame, and a film grain frame region luminance value Y FILMGCOLOR_Y, film grain frame region color difference value Cr FILMGCOLOR_Cr, and film grain frame region color difference value Cb FILMGCOLOR_Cb, which represent color information of the film grain frame, as in the case of an advanced content. Since the FILMG_FI is recorded in this area, the standard content can have FILMG_FI for each FP_PGC and each VTSM. When the film grain frame is not used, the film grain frame information FP_FILMG_FI/VMGM_FILMG_FI area is padded with zero. This area is conventionally a reserved area, which is padded with zero, thus maintaining compatibility to the conventional content and player.

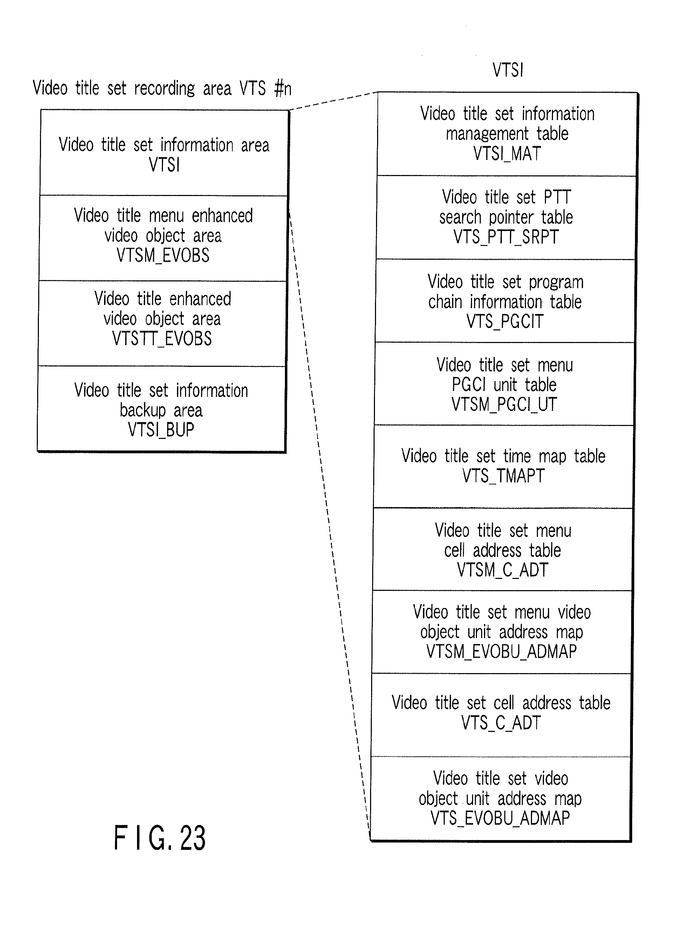

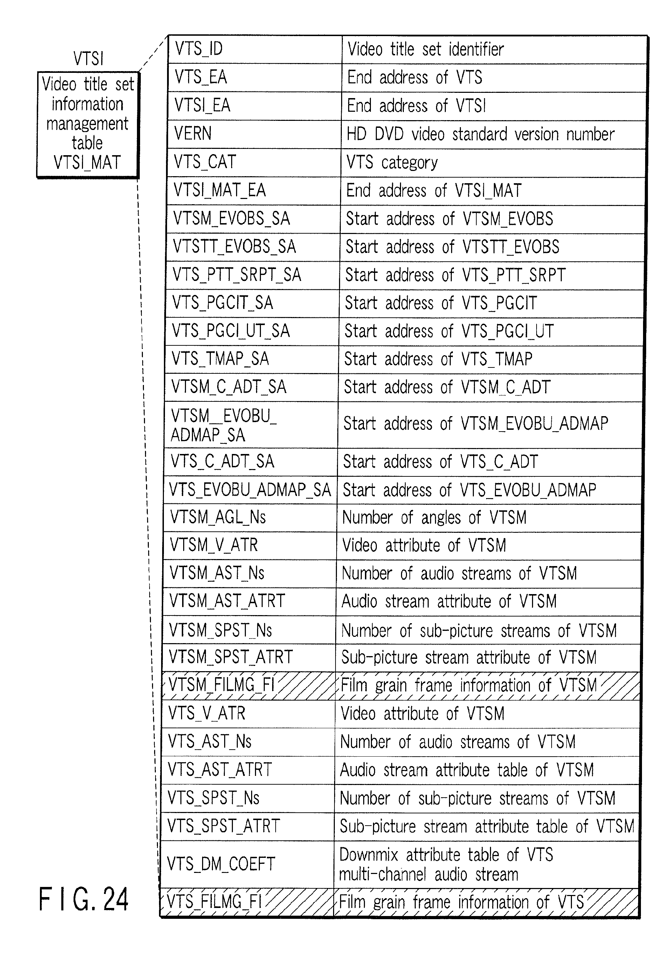

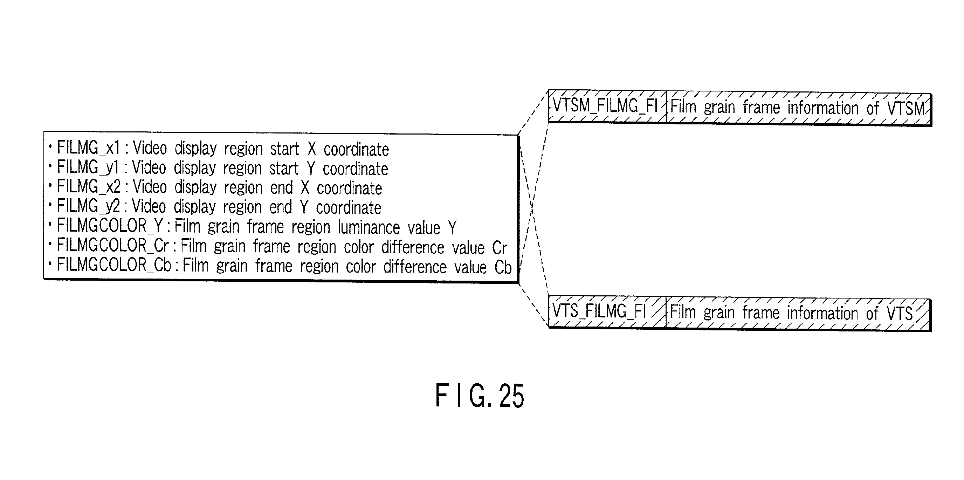

A video title set information area VTSI is configured, as shown in FIGS. 23 to 25, and includes a video title set information management table VTSI_MAT, video title set PTT search pointer table VTS_PTT_SRPT, video title set program chain information table VTS_PGCIT, video title set menu PGCI unit table VTSM_PGCI_UT, video title set time map table VTS_TMAPT, video title set menu cell address table VTSM_C_ADT, video title set menu video object unit address map VTSM_EVOBU_ADMAP, video title set cell address table VTS_C_ADT, and video title set video object unit address map VTS_EVOBU_ADMAP. The VTSI_MAT is configured by VTS identification information, address information in VTSI, attribute information of video, audio, and subtitle data of a VTSM and VTS title, and the like. In this embodiment, the VTSI_MAT records VTSM film grain frame information VTSM_FILMG_FI and VTS title film grain frame information VTSTT_FILMG_FI. The film grain frame information VTSM_FILMG_FI/VTSTT_FILMG_FI has the same information as in the aforementioned information FP_FILMG_FI/VMGM_FILMG_FI. Since the FILMG_FI is recorded in this area, the standard content can have FILMG_FI for each VTSM and each VTS title. When the film grain frame is not used, the film grain frame information FILMG_FI area is padded with zero. This area is conventionally a reserved area, which is padded with zero, thus maintaining compatibility to the conventional content and player.

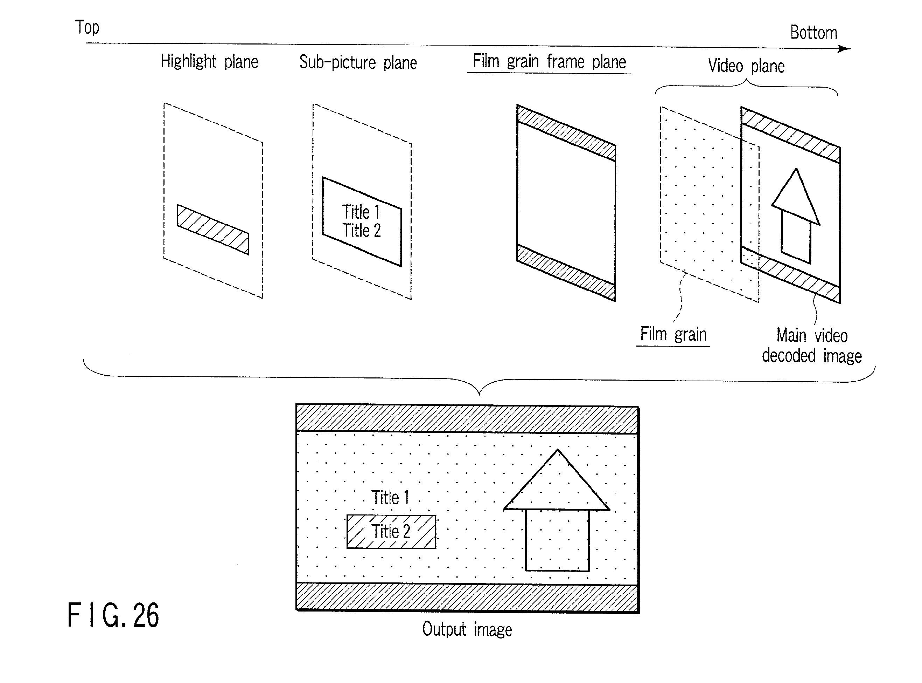

The standard content having the pieces of film grain frame information
FP_FILMG_FI/VMGM_FILMG_FI/VTSM_FILMG_FI/VTSTT_FILMG_FI as described above is displayed by superposing planes in an order shown in FIG. 26. A main video plane as a main video is displayed at the lowermost position. A main video is an image obtained by adding film grain to an image decoded as a main video. On the main video plane, a film grain frame plane, which has a color indicated by the color information (FILMGCOLOR_Y, FILMGCOLOR_Cr, and FILMGCOLOR_Cb) of the film grain frame recorded in the film grain frame information
FP_FILMG_FI/VMGM_FILMG_FI/VTSM_FILMG_FI/VTSTT_FILMG_FI area, and from which a region defined by the video display region information (FILMG_x1, FILMG_y1, FILMG_x2, and FILMG_y2) as a clipping part of the film grain frame is clipped, is superposed. Then, a sub-picture plane used for a subtitle, and a highlight plane used to display selection regions such as buttons and the like are output to overlap each other in this order. As described above, in this embodiment, by inserting the film grain frame plane between the main video plane and sub-picture plane, film grain which is superposed on a region which is not originally needed of the main video plane is overwritten by the film grain frame, thus canceling the film grain effect only for a part in which this effect is unwanted.

An HD DVD player system model of the standard content at this time is the same as the model of the advanced content shown in FIG. 19.

As described above, data includes the color information of the film grain frame and information of the clipping region. Upon playback, a film grain frame is superposed on a decoded image and film grain, thereby avoiding a problem of superposed film grain that appears on the black stripe region which contacts the video region.

### (Sixth Embodiment)

The sixth embodiment will explain an information storage medium which stores film grain frame information (position information of an image region (actual video region), and information playback for playing back a composite image of the image region and film grain based on the film grain frame information stored in this information storage medium.

Examples of HD DVD-Video will be described below.

An advanced content of HD DVD-Video has film grain frame information as follows.

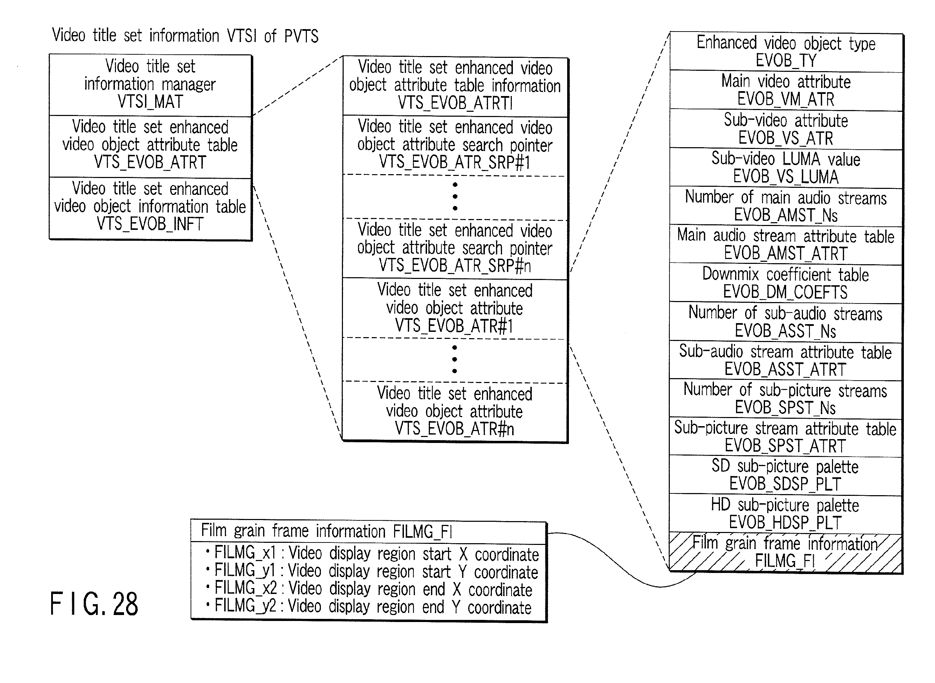

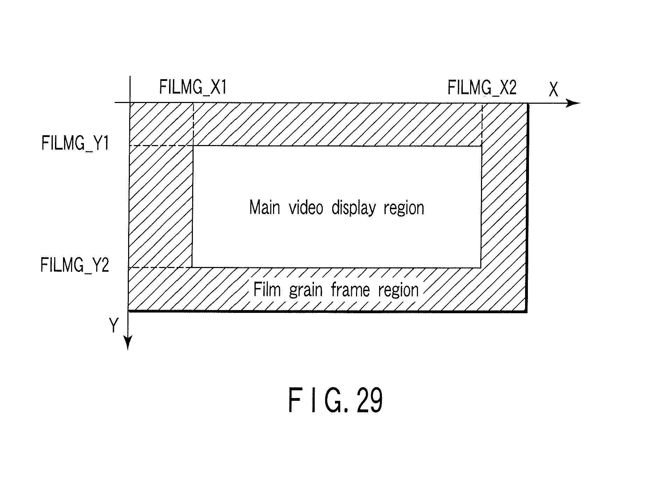

Video title set information VTSI of a primary video set PVTS of an advanced content has a structure shown in FIG. 28. The VTSI records a video title set enhanced video object attribute table VTS_EVOB_ATRT, which includes video title set enhanced video object attribute table information VTS_EVOB_ATRTI, a video title set enhanced video object attribute search pointer VTS_EVOB_ATR_SRP, and a video title set enhanced video object attribute VTS_EVOB_ATR. Furthermore, the video title set enhanced video object attribute VTS EVOB_ATR describes attribute information of main video, sub-video, main audio, sub-audio, and sub-picture, and the like. In this embodiment, the VTS_EVOB_ATR records film grain frame information FILMG_FI. The film grain frame information FILMG_FI records a video display region start X coordinate FILMG_x1, video display region start Y coordinate FILMG_y1, video display region end X coordinate FILMG_x2, and video display region end Y coordinate FILMG_y2, which represent a video display region (see FIG. 29) as a clipping part of a film grain frame, as shown in FIG. 28. Since the FILMG_FI is recorded in this area, the advanced content can have FILMG_FI for each EVOB. When the film grain frame is not used, the film grain frame information FILMG_FI area is padded with zero. This area is conventionally a reserved area, which is padded with zero, thus maintaining compatibility to the conventional HD DVD-Video content and player.

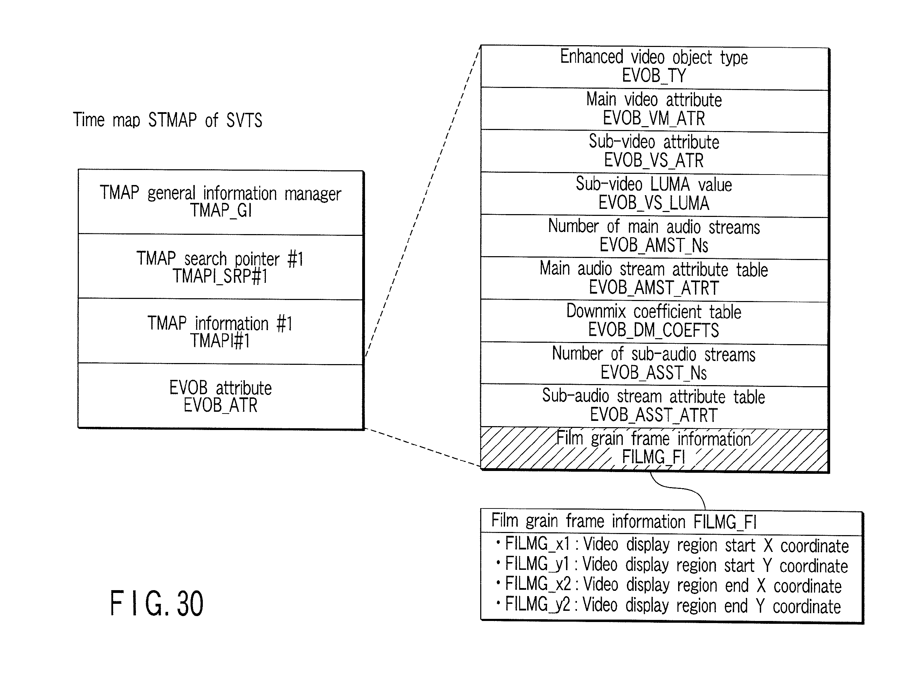

A time map STMAP of a secondary video set SVTS of an advanced content has the structure shown in FIG. 30. The STMAP includes a TMAP general information manager TMAP_GI, TMAP search pointer TMAPI_SRP, TMAP information TMAPI, and EVOB attribute EVOB_ATR. The EVOB attribute EVOB_ATR describes attribute information of main video, sub-video, main audio, and sub-audio, and the like. In this embodiment, the EVOB_ATR records film grain frame information FILMG_FI. The film grain frame information FILMG_FI has the same information as in the aforementioned PVTS. When the film grain frame is not used, the film grain frame information FILMG_FI area is padded with zero. This area is conventionally a reserved area, which is padded with zero, thus maintaining compatibility to the conventional content and player. A playlist can also have the same information.

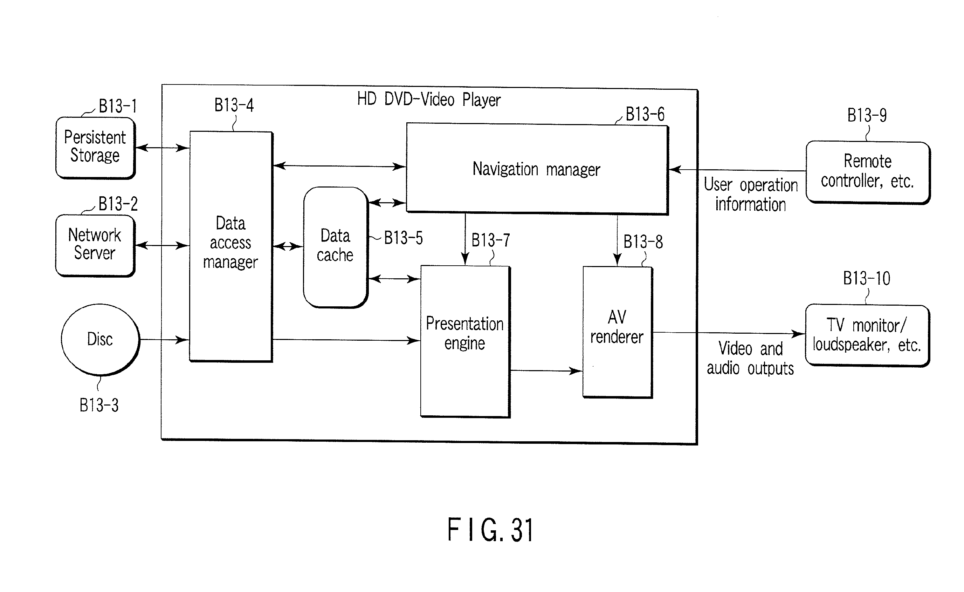

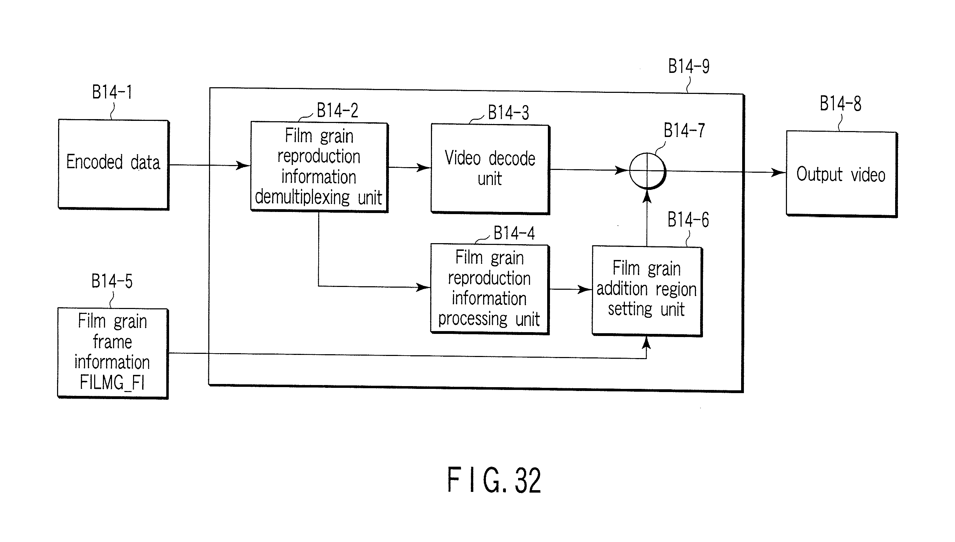

A system model of an HD DVD player is as shown in FIG. 31. An HD DVD player can access persistent storage B13-1 and a network server B13-2 in addition to a disc B13-3. Inputs include user operation information from a remote controller B13-9 or the like, and outputs include video and audio data to a TV monitor and loudspeaker B13-10. A player unit roughly comprises a data access manager B13-4, data cache B13-5, navigation manager B13-6, presentation engine B13-7, and AV renderer B13-8. The data access manager B13-4 controls accesses to the disc, network storage, and persistent storage. The data cache B13-5 includes a file cache and streaming buffer, and temporarily records data whose playback is underway. The navigation manager B13-6 includes a user interface engine which accepts user operations, and a Parser which loads and parses a navigation file. The navigation manager B13-6 executes playback initialization, and controls a title timeline as a playback time axis of a title, commands, and the like. The presentation engine B13-7 demultiplexes and decodes video, audio, and subtitle data, and outputs video, audio, and subtitle information to the AV renderer B13-8. The AV renderer B13-8 includes a part that controls audio mixing, and a part that controls video mixing. The presentation engine B13-7 of this embodiment comprises a video decoder shown in FIG. 32. The presentation engine B13-7 receives film grain frame information FILMG_FI interpreted by the navigation manager, and passes it to the input of the video decoder. A video decoder B14-9 comprises a film grain reproduction information demultiplexing unit B14-2, video decode unit B14-3, film grain reproduction information processing unit B14-4, film grain addition region setting unit B14-6, and addition unit B14-7. The film grain reproduction information demultiplexing unit demultiplexes film grain reproduction information (information required for the film grain reproduction information processing unit B14-4 to reproduce film grain) from encoded data B14-1. The video decode unit B14-3 decodes the encoded data from which the film grain reproduction information is demultiplexed to obtain a decoded image. The film grain reproduction information processing unit B14-4 generates a film grain image according to the film grain reproduction information. At this time, the film grain image has vertical and horizontal sizes corresponding to multiples of the block sizes since it is generated for respective image blocks. The film grain addition region setting unit B14-6 divides the film grain information into an addition region and non-addition region in accordance with film grain frame information FILMG_FI B14-5. At this time, a film grain frame region is the film grain non-addition region, and a main video display region is the film grain addition region. The signal levels of the film grain image of the non-addition region are zero. The addition unit B14-7 adds the addition region of the film grain image and the decoded image to generate an output image B14-8. The output image generated by these operations never adds film grain to a black stripe even in case of a movie material including the black stripe.

A method of providing film grain frame information to an HD DVD-Video standard content will be described below.

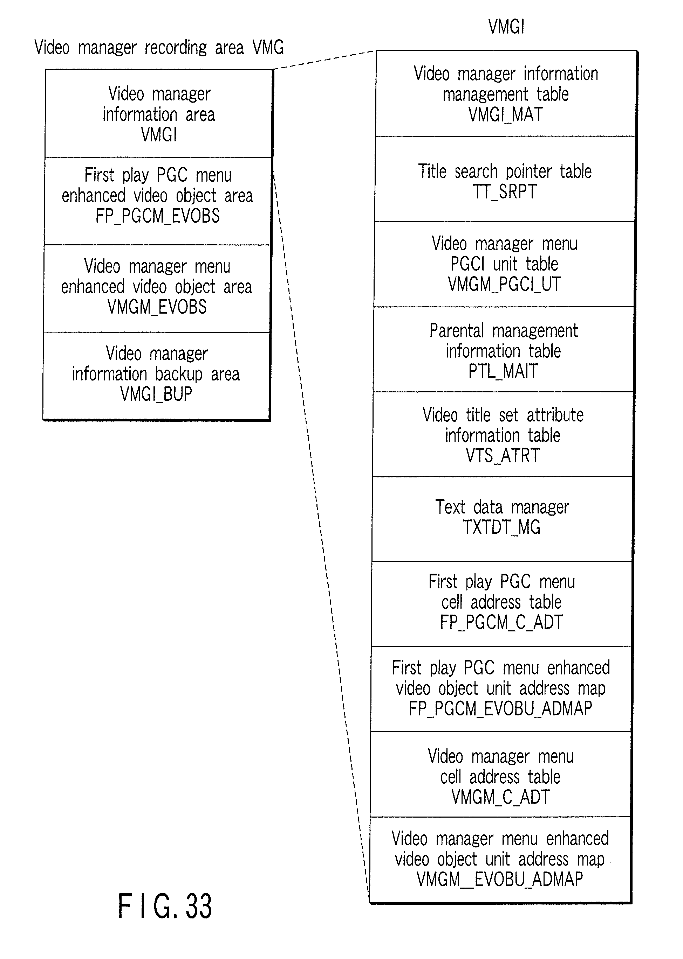

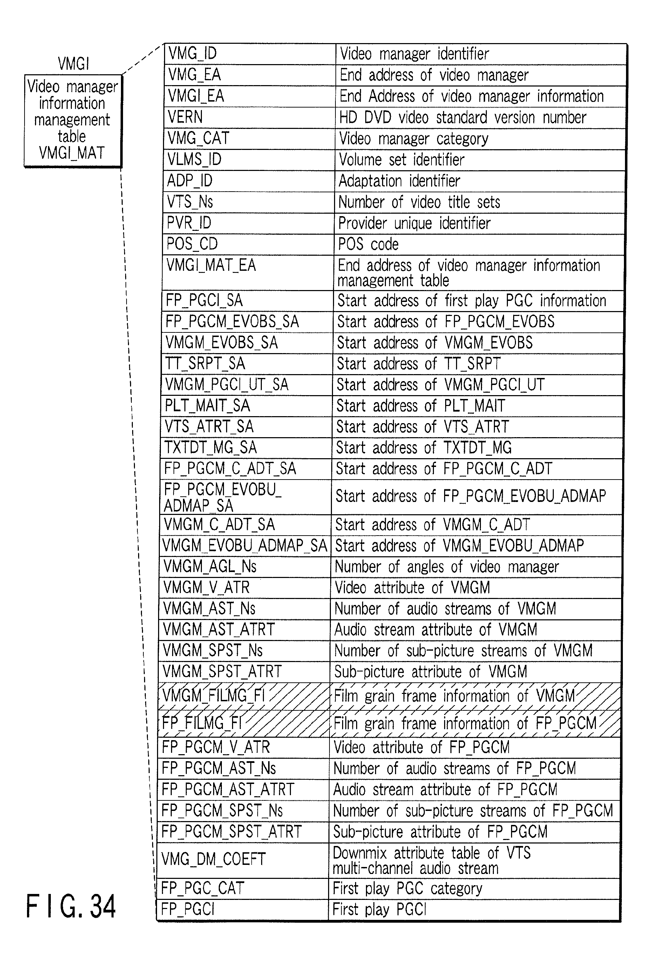

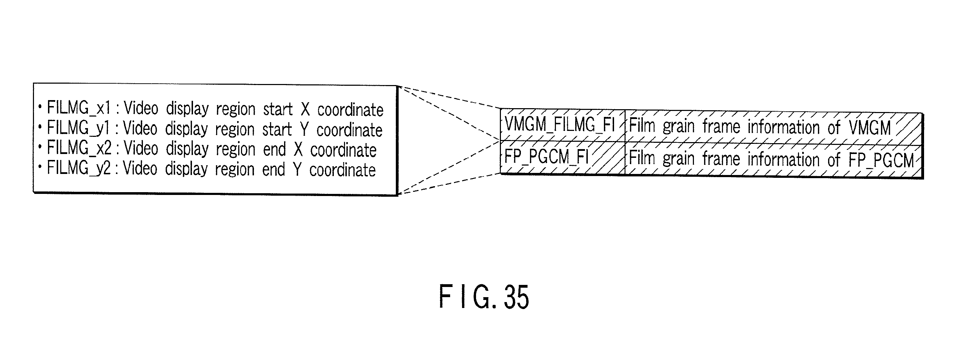

A video manager information area VMGI of a video manager VMG of a standard content has a configuration, as shown in FIGS. 33 to 35, and includes a video manager information management table VMGI_MAT, title search pointer table TT_SRPT, video manager menu PGCI unit table VMGM_PGCI_UT, parental management information table PTL_MAIT, video title set attribute information table VTS_ATRT, text data manager TXTDT_MG, first play PGC menu cell address table FP_PGCM_C_ADT, first play PGC menu enhanced video object unit address table FP_PGCM_C_ADT, and video manager menu cell address table VMGM_C_ADT, video manager menu enhanced video object unit address map VMGM VOBU ADMAP. The VMGI_MAT is configured by VMG identification information, address information in the VMGI, attribute information of FP_PGCM and VMGM video, audio, and subtitle data, and the like. In this embodiment, the VMGI_MAT records FP_PGCM film grain frame information FP_FILMG_FI and VMGM film grain frame information VMGM_FILMG_FI. The film grain frame information FP_FILMG_FI/VMGM_FILMG_FI records a video display region start X coordinate FILMG_x1, video display region start Y coordinate FILMG_y1, video display region end X coordinate FILMG_x2, and video display region end Y coordinate FILMG_y2, which represent a video display region as a clipping part of a film grain frame, as in the case of an advanced content. Since the FILMG_FI is recorded in this area, the standard content can have FILMG_FI for each FP_PGC and each VTSM. When the film grain frame is not used, the film grain frame information FP_FILMG_FI/VMGM_FILMG_FI area is padded with zero. This area is conventionally a reserved area, which is padded with zero, thus maintaining compatibility to the conventional content and player.

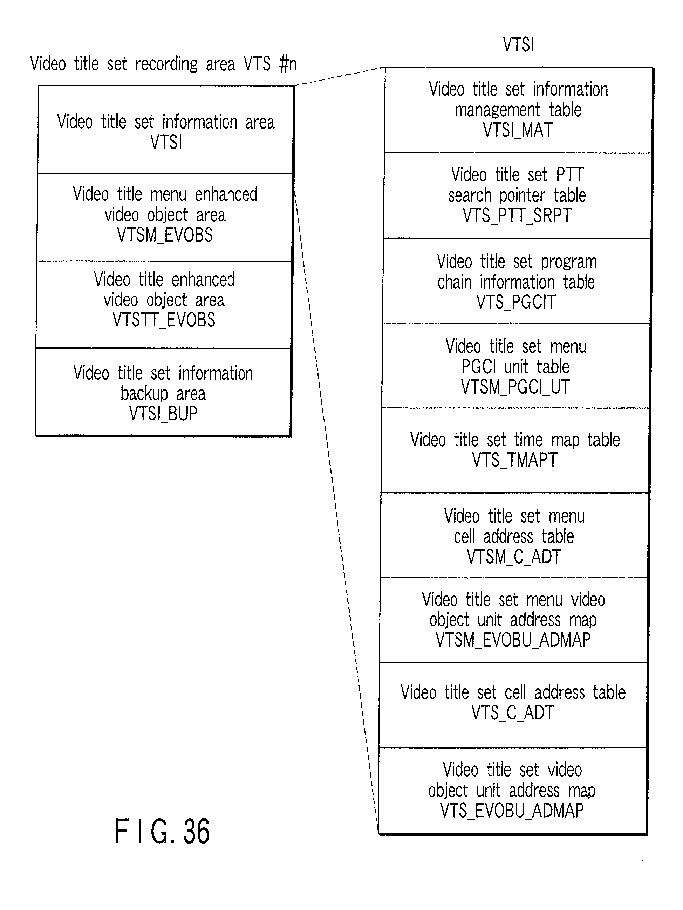

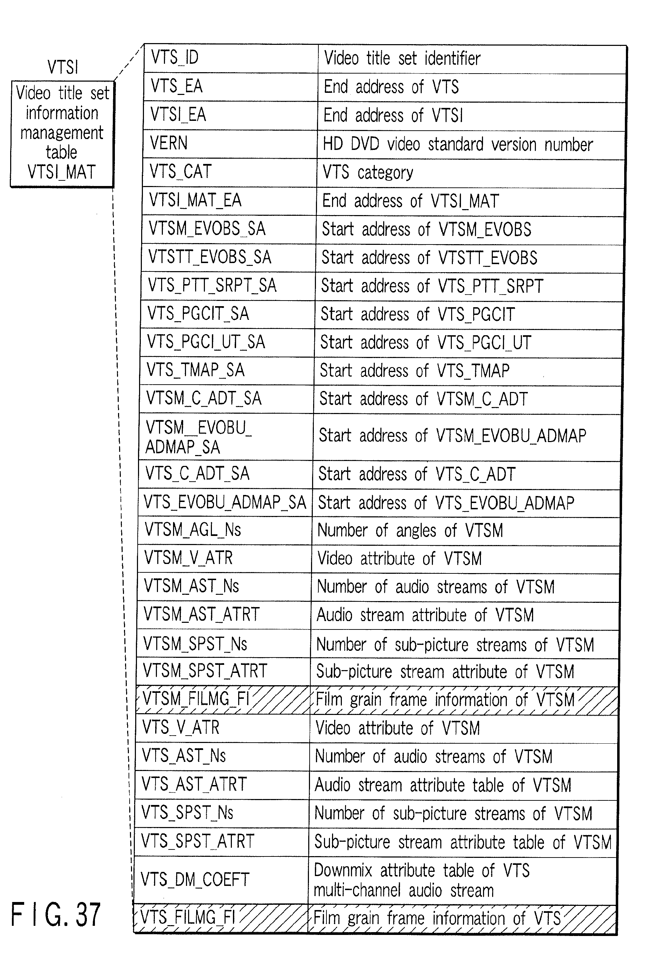

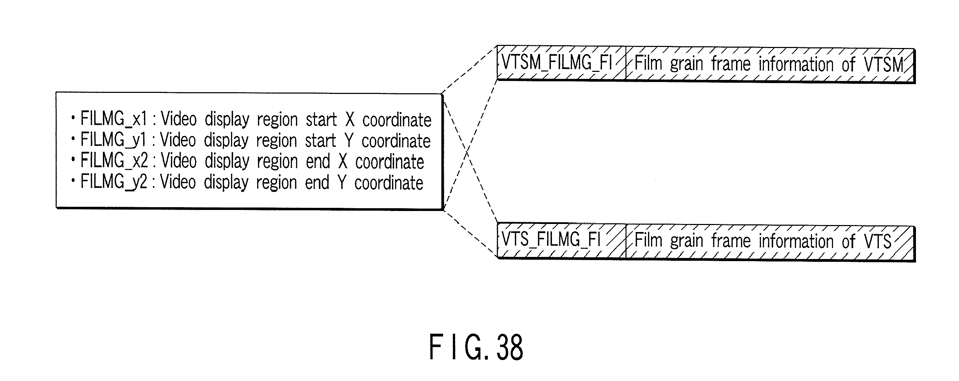

A video title set information area VTSI is configured, as shown in FIGS. 36 to 38, and includes a video title set information management table VTSI_MAT, video title set PTT search pointer table VTS_PTT_SRPT, video title set program chain information table VTS_PGCIT, video title set menu PGCI unit table VTSM_PGCI_UT, video title set time map table VTS_TMAPT, video title set menu cell address table VTSM_C_ADT, video title set menu video object unit address map VTSM_EVOBU_ADMAP, video title set cell address table VTS_C_ADT, and video title set video object unit address map VTS_EVOBU_ADMAP. The VTSI_MAT is configured by VTS identification information, address information in VTSI, attribute information of video, audio, and subtitle data of a VTSM and VTS title, and the like. In this embodiment, the VTSI_MAT records VTSM film grain frame information VTSM_FILMG_FI and VTS title film grain frame information VTSTT_FILMG_FI. The film grain frame information VTSM_FILMG_FI/VTSTT_FILMG_FI has the same information as in the aforementioned information FP FILMG_FI/VMGM_FILMG_FI. Since the FILMG_FI is recorded in this area, the standard content can have FILMG_FI for each VTSM and each VTS title. When the film grain frame is not used, the film grain frame information FILMG_FI area is padded with zero. This area is conventionally a reserved area, which is padded with zero, thus maintaining compatibility to the conventional content and player.

Since the HD DVD player system model of a standard content and the video decoder included in the presentation engine in the HD DVD player system model are the same as those in the case of an advanced content (FIGS. 31 and 32), film grain is never added to a black stripe even in case of a movie material including the black stripe.

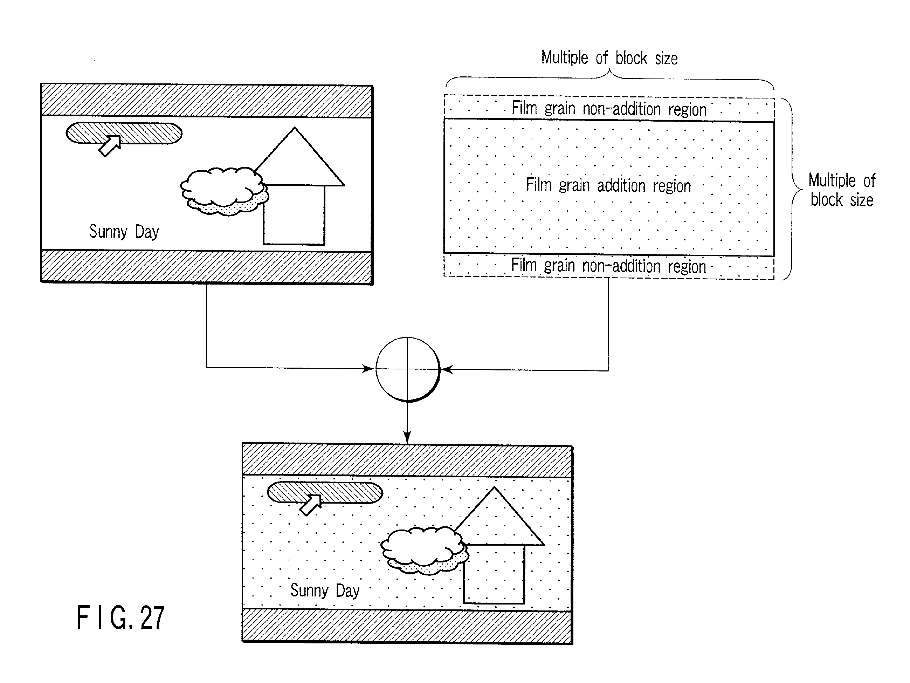

As described above, data includes the information of the clipping region of the film grain frame. A film grain image generated for respective blocks is divided into an addition region and non-addition region, and the signal levels of the non-addition region of the film grain image are set to be zero. As shown in FIG. 27, upon adding the decoded image and film grain image, only a film grain image of the addition region is added to the decoded image, thereby avoiding a problem of superposed film grain that appears on the black stripe region which contacts the video region.

## Claims

1. An information playback method for playing back an information storage medium which records encoded information generated by an information encoding method, **characterized by** comprising:
generating noise image information from first model information included in the encoded information;
generating decoded image information by decoding encoded image information included in the encoded information;
generating output image information based on the decoded image information and the noise image information; and
outputting the output image information.

2. The method according to claim 1, **characterized in that** the information encoding method comprises:
generating main image information from input image information by applying noise reduction processing to the input image information;
estimating the noise image information included in the input image information from the input image information and the main image information to generate the first model information corresponding to the noise image information;
correcting a parameter which does not satisfy a predetermined condition of a plurality of parameters included in the first model information to generate second model information including the plurality of parameters which reflect correction;
encoding the main image information to generate the encoded image information; and
generating the encoded information including the encoded image information, the first model information, and the second model information.

3. The method according to claim 2, **characterized in that** the information storage medium stores the encoded information.

4. The method according to claim 1, **characterized in that** the information encoding method comprises:
encoding input image information to generate the encoded image information;
estimating the noise image information, which is lost upon generation of the encoded image information, from the input image information and the decoded image information of the encoded image information to generate the first model information corresponding to the noise image information;
correcting a parameter which does not satisfy a predetermined condition of a plurality of parameters included in the first model information to generate second model information including the plurality of parameters which reflect the correction; and
generating the encoded information including the encoded image information, the first model information, and the second model information.

5. The method according to claim 4, **characterized in that** the information storage medium stores the encoded information.

6. An information playback method for playing back an information storage medium which records encoded information generated by an information encoding method, **characterized by** comprising:
generating decoded image information by decoding encoded image information included in the encoded information;
compositing noise image information in model information to the decoded image information based on region information in the model information included in the encoded information; and
outputting a composite image.

7. The method according to claim 6, **characterized in that** the information encoding method comprises:
generating main image information from input image information by applying noise reduction processing to the input image information;
estimating the noise image information included in the input image information from the input image information and the main image information to generate the model information including the noise image information and the region information indicating a composite region of the noise image information to the main image information;
encoding the main image information to generate the encoded image information; and
generating the encoded information including the encoded image information and the model information.

8. The method according to claim 7, **characterized in that** the information storage medium stores the encoded information.

9. The method according to claim 6, **characterized in that** the information encoding method comprises:
encoding input image information to generate the encoded image information;
estimating the noise image information, which is lost upon generation of the encoded image information, from the input image information and the decoded image information of the encoded image information to generate the model information including the noise image information, and a composite region of the noise image information to the main image information;
encoding the main image information to generate the encoded image information; and
generating the encoded information including the encoded image information and the model information.

10. The method according to claim 9, **characterized in that** the information storage medium stores the encoded information.

11. An information playback method for playing back an information storage medium which stores image information including an image region and a non-image region, noise image information to be composited to the image information, and control information which controls display of an overlapping region of the non-image region and the noise image, the method **characterized by** comprising:
generating a control image based on color information of the control image to be superposed on the non-image region, and position information indicating a display position of the image region, which are included in the control information;
compositing the image information, the noise image information, and the control image; and
outputting a composite image.

12. The method according to claim 11, **characterized in that** the noise image information is composited to the image region based on the noise image information and the position information indicating the display position of the image region,
a composite image is output, and
the control information includes the position information.

13. An information encoding method **characterized by** comprising:
generating main image information from input image information by applying noise reduction processing to the input image information;
estimating noise image information included in the input image information from the input image information and the main image information to generate first model information corresponding to the noise image information;
correcting a parameter which does not satisfy a predetermined condition of a plurality of parameters included in the first model information to generate second model information including the plurality of parameters which reflect the correction;
encoding the main image information to generate encoded image information; and
generating encoded information including the encoded image information, the first model information, and the second model information.

14. An information storage medium storing the encoded information generated by an information encoding method according to claim 13.
